(19) Europäisches Patentamt
European Patent Office
Office européen des brevets

(11) **EP 2 937 814 A1**

(12) **EUROPEAN PATENT APPLICATION**

(43) Date of publication:
**28.10.2015 Bulletin 2015/44**

(51) Int Cl.:
**G06K 9/00** (2006.01) **G01P 21/00** (2006.01)

(21) Application number: **15164453.1**

(22) Date of filing: **21.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.04.2014 JP 2014088009**

(71) Applicant: **Hitachi, Ltd.**
**Tokyo 100-8280 (JP)**

(72) Inventors:
• **Kiyama, Noboru**
**Tokyo, 100-8280 (JP)**
• **Osafune, Tatsuaki**
**Tokyo, 100-8280 (JP)**
• **Sobue, Tsuneo**
**Tokyo, 100-8280 (JP)**
• **Takahashi, Toshimitsu**
**Tokyo, 100-8280 (JP)**
• **Izumi, Yoshifumi**
**Tokyo, 100-8280 (JP)**

(74) Representative: **MERH-IP**
**Matias Erny Reichl Hoffmann**
**Paul-Heyse-Strasse 29**
**80336 München (DE)**

(54) **PROGRAM PRODUCT, PORTABLE DEVICE, VEHICLE DRIVING CHARACTERISTIC DIAGNOSIS SYSTEM, AND VEHICLE ACCELERATION CALCULATION METHOD**

(57) A computer-readable program product contains a program for a portable device 100. The program is executed upon a portable device comprising an acceleration sensor 140 that detects accelerations in three axial directions and a calculation device. The program causes the calculation device to execute: a first process of detecting a stationary state of the portable device 100, and calculating tilt angles of the portable device 100; a second process of detecting the straight-ahead driving state of a vehicle to which the portable device is mounted, and calculating a rotational angle of the portable device with respect to a direction of progression of the vehicle; and a third process of converting the accelerations detected by the acceleration sensor to accelerations of the vehicle, on the basis of the tilt angles and the rotational angle.

FIG.13

EP 2 937 814 A1

**Description**

The disclosure of the following priority application is herein incorporated by reference: Japanese Patent Application No. 2014-088009 filed April 22, 2014.

The present invention relates to a program product, to a portable device, and to a vehicle driving characteristic diagnosis system and a vehicle acceleration calculation method that employ such a portable device.

Recently, insurance services are being supplied that determine the insurance premium for a vehicle according to the manner in which the driver utilizes the vehicle. With this type of insurance service, in order to determine appropriate insurance premiums corresponding to the accident risks presented by various drivers, it is necessary to set the insurance premium in consideration of the driving characteristics of the various drivers; for example: if the driver holds an excellent driving license (a "gold" license), then his insurance premium ought to be relatively cheaper; the driver's insurance premium ought to be varied according to the distance he drives in a year; and so on.

With a method of evaluating driving characteristic such as that described above, generally parameters are employed that have been ascertained statistically to correlate with accident risk. However, it is not possible to estimate the accident risk correctly for some particular driver who does not follow the general statistical tendency, such as for example for a driver who holds an excellent driving license but who usually never drives, or for a driver whose accident risk does not vary according to the distance he travels in a year because his level of driving skill is shallow, or the like. Due to this, the problem of appropriately applying a high insurance premium to a driver whose accident risk is high while applying a low insurance premium to a driver whose accident risk is low is quite a difficult one.

As a countermeasure against problems such as described above, a service has been investigated that takes advantage of the travel history of the vehicle (i.e. probe data), individually diagnoses the driving characteristic of each of the drivers, and reflects this driving characteristic by application to the cost of the insurance premium. The driving characteristic of each driver is calculated by taking as a standard his tendency to accelerate or to brake while driving the vehicle, in particular the number of times that he performs abrupt acceleration or abrupt braking or the like. Not only may a car navigation device be employed as a means for calculating the acceleration of the vehicle, but, in some cases, a portable device such as a smart phone or the like or a cradle for a portable device equipped with an acceleration sensor of higher accuracy may also be employed. For example, in Japanese Patent 4,729,137, it is disclosed to hold a portable device in a cradle that is installed upon the dashboard of a vehicle, and to supplement information about the behavior of the vehicle as detected by a sensor unit of the portable device by employing the results of detection by a sensor unit of high accuracy that is housed in the cradle.

With the prior art technique disclosed in Japanese Patent 4,729,137, in order to detect the behavior of the vehicle with the sensor unit of the portable device, and in order to supplement the results of this detection by using the results of detection by the sensor unit of the cradle, it is necessary for there to be an already known mutual relationship between the moving direction of the vehicle and the axial directions of detection by the sensor units of the cradle and the portable device. Accordingly, if for example the driver has tilted the screen of the portable device so as to view that screen more easily, then it becomes impossible to detect the behavior of the vehicle in an accurate manner, since the axial directions of detection by the sensor unit of the portable device have undesirably been changed. As a result, there is the problem that it is not possible to diagnose the driving characteristic of the driver correctly.

The present invention has been conceived in order to eliminate problems such as described above with the prior art technique. Its main object is to detect the behavior of a vehicle in an accurate manner by employing a portable device in order to diagnose the driving characteristic of the driver, whatever may be the manner according to which that portable device is installed.

A computer-readable program product according to a first aspect of the present invention contains a program for a portable device. The program is executed upon a portable device comprising an acceleration sensor that detects accelerations in three axial directions and a calculation device. The program causes the calculation device to execute: a first process of detecting a stationary state of the portable device, and calculating tilt angles of the portable device; a second process of detecting the straight-ahead driving state of a vehicle to which the portable device is mounted, and calculating a rotational angle of the portable device with respect to a direction of progression of the vehicle; and/or a third process of converting the accelerations detected by the acceleration sensor to accelerations of the vehicle, on the basis of the tilt angles and the rotational angle.

According to a second aspect of the present invention, in the program product of the first aspect, it is preferred that: the portable device further comprises at least one of a bearings sensor that detects bearings in three axial directions, and a position sensor that detects a position; in the first process, the stationary state of the portable device is detected on the basis of change of the acceleration detected by the acceleration sensor; and in the second process, when the stationary state of the portable device has been detected, the straight-ahead driving state of the vehicle is detected on the basis of change of at least one of the bearings detected by the bearings sensor, the position detected by the position sensor, and the acceleration detected by the acceleration sensor.

According to a third aspect of the present invention, in the program product of the first or second aspect, it is preferred that, in the first process and the third process, the calculation device is caused to acquire a gradient of a road upon which the vehicle is traveling, and to correct the tilt angles on the basis of the gradient of the road that has been acquired.

According to a fourth aspect of the present invention, in the program product of any one of the first through third aspects, it is preferred that: the portable device further comprises an image display unit; and the direction of progression of the vehicle is displayed upon the image display unit on the basis of the rotational angle.

According to a fifth aspect of the present invention, in the program product of the fourth aspect, the image display unit may be a touch panel, and it is preferred that, in addition to the direction of progression of the vehicle, at least one of an actuation button for cancelling the stationary state of the portable device detected by the first process, and an actuation button for cancelling the straight-ahead driving state of the vehicle detected by the second process, is further displayed upon the touch panel.

According to a sixth aspect of the present invention, in the program product of any one of the first through fifth aspects, the portable device may further comprise a camera that performs video photography, and it is preferred that a driving video related to a driving view from the vehicle is photographed by the camera, and processing is further executed by the calculation device to determine a timing of ending of photography of the driving video on the basis of acceleration of the vehicle.

According to a seventh aspect of the present invention, in the program product of any one of the first through sixth aspects, driving characteristic diagnosis for the driver of the vehicle may be performed by the portable device on the basis of the history of acceleration of the vehicle.

A computer-readable program product according to an eighth aspect of the present invention contains a program for a portable device. The program is executed upon a portable device comprising an image display unit. The program causes the portable device to execute processing to detect a direction of progression of a vehicle to which the portable device is mounted, and to display the detected direction of progression of the vehicle upon the image display unit.

A portable device according to a ninth aspect of the present invention comprises an acceleration sensor that detects accelerations in three axial directions, and executes the program of any one of the first through eighth aspects.

A vehicle driving characteristic diagnosis system according to a tenth aspect of the present invention comprises: a portable device according to the ninth aspect; and a center device that performs wireless communication with the portable device. In this system, the portable device detects acceleration of a vehicle to which the portable device is mounted, and transmits the acceleration to the center device, and the center device performs driving characteristic diagnosis for the driver of the vehicle, on the basis of the history of acceleration of the vehicle transmitted from the portable device.

A method according to an eleventh aspect of the present invention of calculating acceleration of a vehicle to which a portable device including an acceleration sensor that detects accelerations in three axial directions is mounted comprises: detecting a stationary state of the portable device, and calculating tilt angles of the portable device; detecting a straight-ahead driving state of the vehicle, and calculating a rotational angle of the portable device with respect to a direction of progression of the vehicle; and calculating the acceleration of the vehicle by converting the accelerations detected by the acceleration sensor to accelerations of the vehicle, on the basis of the tilt angles and the rotational angle.

According to the present invention, it is possible to detect the behavior of a vehicle in an accurate manner by employing a portable device in order to diagnose the driving characteristic of the driver, whatever may be the manner according to which that portable device is installed.

BRIEF DESCRIPTION OF THE DRAWINGS

Fig. 1 is a figure showing an example of a structure of a system for diagnosis of the vehicle driving characteristic of a driver using a portable device;
Fig. 2 is a figure showing an example of a definition of accelerations along three axes that are detected by a three-axis acceleration sensor of this portable device;
Fig. 3 is a figure showing an example of a definition of accelerations along three axes with respect to the Earth;
Fig. 4 is a figure showing an example of definition of accelerations along three axes with respect to the vehicle;
Fig. 5 is a figure showing an example of a format for user information and probe information accumulated in a storage device of a telematics center;
Fig. 6 is a figure showing a flow of processing related to gathering and accumulation of probe information;
Fig. 7 is a figure showing a flow of processing related to gathering and accumulation of video data;
Fig. 8 is a figure showing a flow of processing for calculation of a rotation matrix from a device-three-axis-based coordinate system to a vehicle-three-axis-based coordinate system;
Fig. 9 is a figure showing a flow of processing for device stationary detection;

Fig. 10 is a figure showing a flow of processing for vehicle straight-ahead driving detection;

Fig. 11 is a figure showing a flow of processing related to diagnosis of the driving characteristic of a driver, and to display of the results of that diagnosis;

Fig. 12 is a figure showing an example of a screen that is displayed upon an input/output device of the portable device before driving of the subject vehicle is started;

Fig. 13 is a figure showing an example of a screen that is displayed upon the input/output device of the portable device after driving of the subject vehicle has started;

Fig. 14 is a figure showing an example of a screen showing vehicle driving characteristic diagnosis results displayed upon the input/output device of the portable device; and

Fig. 15 is a figure showing how a program may be provided to a portable device.

DESCRIPTION OF PREFERRED EMBODIMENT

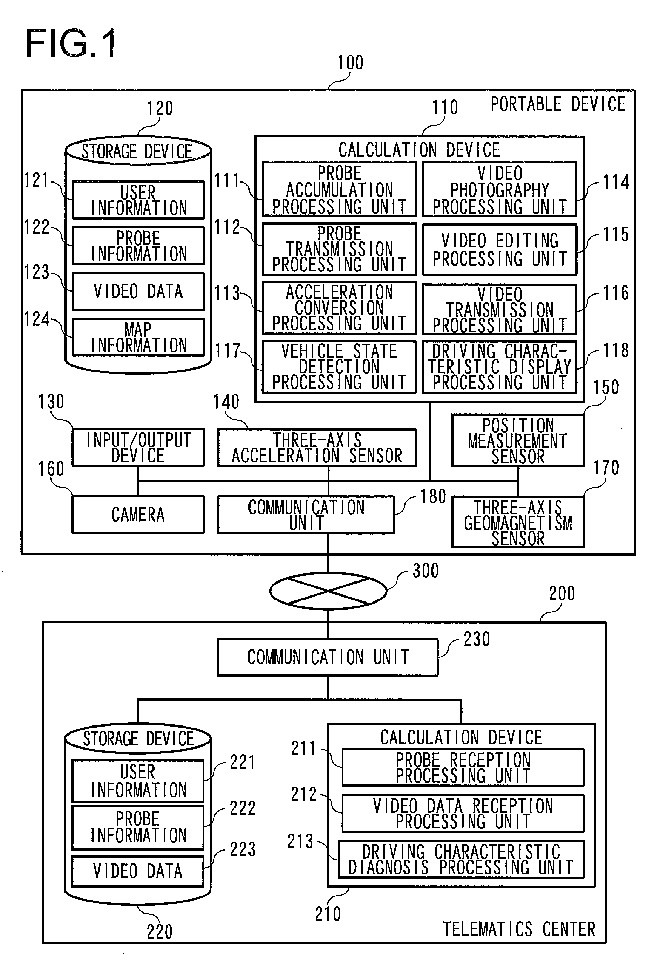

In the following, an embodiment of the present invention will be explained with reference to Fig. 1 through Fig. 14.

Fig. 1 shows an example of the structure of a system for diagnosis of vehicle driving characteristic with a portable device.

The vehicle driving characteristic diagnosis system with a portable device shown in Fig. 1 comprises a portable device 100 that gathers and transmits probe data during driving, a telematics center 200 that receives this probe data from the portable device 100 and diagnoses the driving characteristic of the driver, and a network 300 that enables communication between them. For example, a mobile telephone network, the internet network, a short distance wireless communication network such as a wireless LAN or the like, or a network consisting of a combination of the above may be employed as the network 300.

The portable device 100 comprises a calculation device 110, a storage device 120, an input/output device 130, a three-axis acceleration sensor 140, a position measurement sensor 150, a camera 160, a three-axis geomagnetism sensor 170, and a communication unit 180. For example, a PND (Portable Navigation Device) mounted to the vehicle, a smart phone, a driving recorder, a cradle or the like for fixing one of these to the vehicle, or a combination thereof may be considered for the portable device 100. In the following, the vehicle to which this portable device 100 is mounted will be termed "the subject vehicle".

The calculation device 110 may, for example, comprise a CPU (Central Processing Unit) and a RAM (Random Access Memory) and so on, and performs processing for the portable device 100 to implement functions of various types by executing a predetermined operating program. Functionally, this calculation device 110 comprises a probe accumulation processing unit 111, a probe transmission processing unit 112, an acceleration conversion processing unit 113, a video photography processing unit 114, a video editing processing unit 115, a video transmission processing unit 116, a vehicle state detection processing unit 117, and a driving characteristic display processing unit 118. Each of these functions is implemented by a corresponding predetermined program being executed by the calculation device 110. In other words, by appropriate programs being executed by the calculation device 110, the calculation device 110 can be caused to function as the probe accumulation processing unit 111, the probe transmission processing unit 112, the acceleration conversion processing unit 113, the video photography processing unit 114, the video editing processing unit 115, the video transmission processing unit 116, the vehicle state detection processing unit 117, and the driving characteristic display processing unit 118.

The probe accumulation processing unit 111 gathers probe data on the basis of the sensor values acquired from the sensors, i.e. the three-axis acceleration sensor 140, the position measurement sensor 150, and the three-axis geomagnetism sensor 170, and accumulates this probe data in the storage device 120. Thus, the probe data that has been gathered by the probe accumulation processing unit 111 is accumulated as probe information 122 in the storage device 120.

The probe transmission processing unit 112 transmits the probe information 122 that has been accumulated in the storage device 120 to the telematics center 200 by using the communication unit 180. Due to this, the probe data that has been gathered by the portable device 100 is transmitted from the communication unit 180 to the telematics center 200 via the network 300.

From the probe information 122 that has been accumulated in the storage device 120 and from the state of the subject vehicle, the acceleration conversion processing unit 113 performs processing in order to calculate the accelerations of the subject vehicle in the longitudinal direction, in the transverse direction, and in the vertical direction. It should be understood that the processing performed by this acceleration conversion processing unit 113 will be explained in detail hereinafter.

By photographing the view in front of the subject vehicle or the like by using the camera 160, the video photography processing unit 114 acquires driving video that shows the view from the subject vehicle during driving. The data for the driving video photographed by the video photography processing unit 114 is accumulated in the storage device 120 as video data 123.

The video editing processing unit 115 performs editing of the driving video by clipping out and extracting required portions from the video data 123 that has been accumulated in the storage device 120.

By using the communication unit 180, the video transmission processing unit 116 transmits the driving video that has been edited by the video editing processing unit 115 to the telematics center 200. Due to this, driving video related to the driving view from the subject vehicle that has been photographed by the portable device 100 is transmitted from the communication unit 180 to the telematics center 200 via the network 300.

On the basis of the probe information 122 that has been accumulated in the storage device 120, the vehicle state detection processing unit 117 performs processing for specifying the current states of the portable device 100 and of the subject vehicle. It should be understood that the processing performed by this vehicle state detection processing unit 117 will be explained in detail hereinafter.

The driving characteristic display processing unit 118 queries the telematics center 200 for the results of diagnosis of the driving characteristic of the driver of the subject vehicle, receives with the communication unit 180 the results of driving characteristic diagnosis that are transmitted from the telematics center 100 in response to this query, and displays these results upon the input/output device 130. It should be understood that the driving characteristic display processing unit 118 is not only limited to being the portable device 100 that transmits probe data; this function could also be provided via some other information device that is mounted to the vehicle. For example, some other portable device owned by the driver of the subject vehicle or a PC (Personal Computer) or the like may include the driving characteristic display processing unit 118, and may query the telematics center 200 for the results of driving characteristic diagnosis of the subject driver.

The storage device 120, for example, may include a HDD (Hard Disk Drive), an SSD (Solid State Drive), a flash memory, a ROM (Read Only Memory), or the like. User information 121, the probe information 122, the video data 123, and map information 124 are stored in this storage device 120. The user information 121 is information for managing the system user who possesses the portable device 100. The map information 124 includes position information, connection information, gradient information, and so on for various roads. It should be understood that it would also be acceptable for the map information 124 to be accumulated in a storage device 220 of the telematics center 200. In that case, when the portable device 100 needs to utilize the map information 124, it is anticipated that it will obtain that map information from the telematics center 200 via the network 300. Moreover, programs to be executed by the calculation device 110 and datasets of various types required for execution of such programs are also stored in the storage device 120.

The input/output device 130 comprises various types of actuation members that function as input devices, and an image display unit and/or an audio output unit that function as output devices. This input/output device 130, for example, may be a combination of a touch panel, a keyboard, a mouse, a speaker, and so on.

The three-axis acceleration sensor 140 detects the acceleration experienced by the portable device 100 along three axial directions, and outputs the results of this detection to the calculation device 110.

The position measurement sensor 150 detects the position of the portable device 100 (in other words, the position of the subject vehicle), and outputs the result of this detection to the calculation device 110. This position measurement sensor 150 may, for example, receive radio waves transmitted from satellites on the basis of the GPS (Global Positioning System) standard or the like, and may calculate its position from the time information included in these radio waves. It should be understood that it is also possible to determine the present time by utilizing this position measurement sensor 150.

The camera 160 functions for video photography, and, when the portable device 100 is installed in the subject vehicle, this camera 160 is mounted in such a position and orientation as to be capable of photographing the view outside the vehicle in its direction of photography.

The three-axis geomagnetism sensor 170 is a bearing sensor that, on the basis of the geomagnetism experienced by the portable device 100, detects the bearings of the portable device 100 around three axial directions. The bearings detected by this three-axis geomagnetism sensor 170 are outputted to the calculation device 110. It should be understood that it would also be acceptable to detect the bearings of the portable device 100 around three axial directions by using some bearing sensor other than a geomagnetism sensor.

The communication unit 180 comprises a network card or the like that conforms to a communication standard required for cable communication or wireless communication or both via a cable LAN (Local Area Network) or a wireless LAN, and transmits and receives data to and from the telematics center 200 on the basis of communication protocols of various kinds. The data transmitted from the telematics center 200 is supplied from the communication unit 180 to the driving characteristic display processing unit 118.

The telematics center 200 comprises a calculation device 210, a storage device 220, and a communication unit 230.

The calculation device 210 comprises, for example, a CPU and a RAM and so on, and, by executing a predetermined operating program, performs processing in order for the telematics center 200 to implement functions of various types. Functionally, this calculation device 210 comprises a probe reception processing unit 211, a video data reception processing unit 212, and a driving characteristic diagnosis processing unit 213. These functions are implemented by respective predetermined programs being executed by the calculation device 210. In other words, by such programs being executed by the calculation device 210, the calculation device 210 can be caused to function as the probe reception processing unit 211, the video data reception processing unit 212 and the driving characteristic diagnosis processing unit 213.

The probe reception processing unit 211 receives probe data transmitted by the probe transmission processing unit 112 via the network 300 from the portable device 100. This probe data that has been received is accumulated in the storage device 220 as probe information 222.

The video data reception processing unit 212 receives driving video related to the driving view from the subject vehicle transmitted from the portable device 100 by the video transmission processing unit 116. This driving video that has been received is accumulated in the storage device 220 as video data 223.

In response to a query from the driving characteristic display processing unit 118, the driving characteristic diagnosis processing unit 213 diagnoses the driving characteristic of the driver of the subject vehicle on the basis of the probe information 222 accumulated in the storage device 220. The results of this diagnosis of driving characteristic by the driving characteristic diagnosis processing unit 213 are transmitted to the portable device 100 by the communication unit 230 via the network 300. It should be understood that it would also be acceptable for the telematics center 200 to transmit the results of processing by the driving characteristic diagnosis processing unit 213 to some information terminal or center other than the portable device 100. In this case, for example, it may be considered to transmit the driving characteristic diagnosis results to a center in a system of a vehicle insurance company, in order to determine an insurance premium for the driver, or the like.

The storage device 220 may comprise, for example, an HDD, an SSD, a flash memory, a ROM, or the like. User information 221, the probe information 222, and the video data 223 are stored in this storage device 220. The user information 221 is information for managing the system user who transmits probe data using the portable device 100, and corresponds to the user information 121 accumulated in the storage device 120 of the portable device 100. Moreover, programs executed by the calculation device 210 and datasets of various types required for the execution of such programs are also stored in the storage device 220.

The communication unit 230 comprises a network card or the like that conforms to a prescribed communication standard for cable communication or wireless communication or both via a cable LAN or via a wireless LAN, and transmits and receives data to and from the portable device 100 on the basis of communication protocols of various kinds. The data transmitted from the portable device 100 is supplied from the communication unit 230 to the probe reception processing unit 211 and to the video data reception processing unit 212.

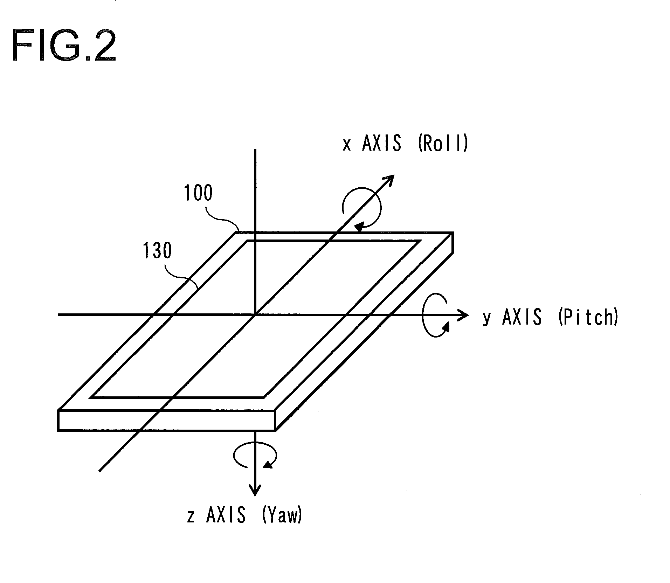

Fig. 2 shows an example of a definition of accelerations along three axes that are detected by the three-axis acceleration sensor 140 of this portable device 100.

In Fig. 2, a display device such as, for example, a touch panel of a smart phone or the like is installed to the portable device 100 as a portion of the input/output device 130. At this time, the three axes of the accelerations detected by the three-axis acceleration sensor 140 are defined as shown in Fig. 2. In concrete terms, with respect to the display surface of the input/output device 130, the x axis is defined as being parallel to the vertical direction (i.e. the longitudinal direction) of the portable device 100; with respect to the display surface of the input/output device 130, the y axis is defined as being parallel to the transverse direction (i.e. the shorter direction) of the portable device 100; and the z axis is defined as being orthogonal with respect to the display surface of the input/output device 130. The positive directions of these axes are defined as follows: for the x axis, the upward direction upon the screen; for the y axis, the rightward direction upon the screen; and, for the z axis, the direction downward through the screen. Accordingly, if for example the portable device 100 is a smart phone, and if it is placed upon a flat desk so that its screen faces upward, then the acceleration due to gravity is along the positive direction of the z axis.

If the upper edge of the input/output device 130 is considered to be the nose of an airplane, then the x axis agrees with the roll rotational axis, the y axis agrees with the pitch rotational axis, and the z axis agrees with the yaw rotational axis. It should be understood that rotations in the positive direction about each of these rotational axes are defined by the position vectors rotating in the following manner: in roll rotation, the y axis rotates in the direction toward the z axis; in pitch rotation, the z axis rotates in the direction toward the x axis, and, in yaw rotation, the x axis rotates in the direction toward the y axis. It should be understood that, in the following explanation, the coordinate system in which the accelerations along three axes are expressed with reference to the portable device 100 will be termed "the device-three-axis-based coordinate system" or "the xyz coordinate system".

Moreover, the bearing of the portable device 100 obtained by use of the three-axis geomagnetism sensor 170 is defined by the orientation of the x axis of the portable device 100 shown in Fig. 2. For example, if the bearing is taken as being zero when the x axis is pointing in the due North direction, then the three-axis geomagnetism sensor 170 will detect the bearing as being the angular deviation of the x axis with respect to the due North direction.

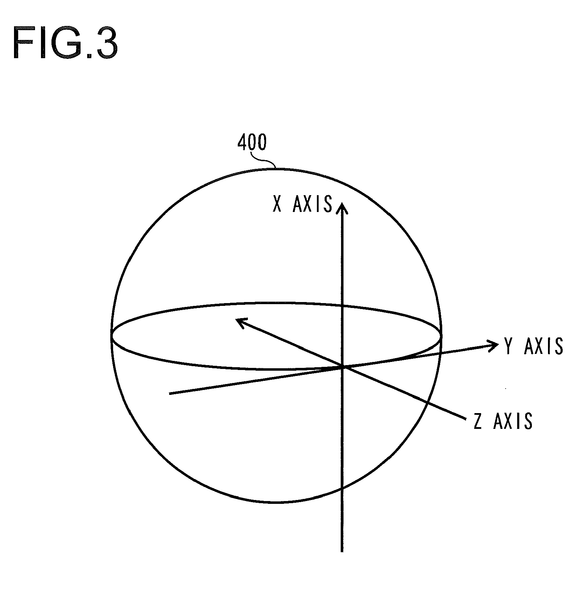

Fig. 3 shows an example of definition of accelerations along three axes at a specified ground point on the Earth.

With respect to a specified ground point 400 on the Earth, the accelerations along the three axes are respectively defined as shown in Fig. 3. In concrete terms: the Z axis is defined as extending along the straight line passing through the specified ground point and the center of the Earth 400; the X axis is defined as being orthogonal to the Z axis and parallel to a plane that passes through the North pole, the South pole, and the specified ground point; and the Y axis is defined as being orthogonal to the X axis and to the Z axis. In this case, the X axis is parallel to the local meridian, while the Y axis is parallel to the local latitude. The positive directions of these axes are defined as follows: for the X axis, the North; for the Y axis, the East; and for the Z axis, the direction of the center of the Earth. Accordingly, with respect to a stationary body upon the Earth, the acceleration of gravity is in the positive direction of the Z axis. It should be understood that, in the following explanation, the coordinate system in which the accelerations along three axes are expressed with reference to the Earth 400 will be termed "the geodetic-datum-based coordinate system" or "the XYZ coordinate system".

Here, the rotation for converting the position vector in the device-three-axis-based coordinate system to a position vector in the geodetic-datum-based coordinate system is given by Equation (1) below:

Equation (1)

$$
\begin{pmatrix} X \\ Y \\ Z \end{pmatrix} = R_{z''}(\gamma) R_{y'}(\beta) R_x(\alpha) \begin{pmatrix} x \\ y \\ z \end{pmatrix}
$$

$$
= \begin{pmatrix} \cos\gamma & -\sin\gamma & 0 \\ \sin\gamma & \cos\gamma & 0 \\ 0 & 0 & 1 \end{pmatrix} \begin{pmatrix} \cos\beta & 0 & \sin\beta \\ 0 & 1 & 0 \\ -\sin\beta & 0 & \cos\beta \end{pmatrix} \begin{pmatrix} 1 & 0 & 0 \\ 0 & \cos\alpha & -\sin\alpha \\ 0 & \sin\alpha & \cos\alpha \end{pmatrix} \begin{pmatrix} x \\ y \\ z \end{pmatrix}
$$

$$
= \begin{pmatrix} \cos\gamma & -\sin\gamma & 0 \\ \sin\gamma & \cos\gamma & 0 \\ 0 & 0 & 1 \end{pmatrix} \begin{pmatrix} \cos\beta & \sin\alpha\sin\beta & \cos\alpha\sin\beta \\ 0 & \cos\alpha & -\sin\alpha \\ -\sin\beta & \sin\alpha\cos\beta & \cos\alpha\cos\beta \end{pmatrix} \begin{pmatrix} x \\ y \\ z \end{pmatrix}
$$

$$
= \begin{pmatrix} \cos\beta\cos\gamma & \sin\alpha\sin\beta\cos\gamma - \cos\alpha\sin\gamma & \cos\alpha\sin\beta\cos\gamma + \sin\alpha\sin\gamma \\ \cos\beta\sin\gamma & \sin\alpha\sin\beta\sin\gamma + \cos\alpha\cos\gamma & \cos\alpha\sin\beta\sin\gamma - \sin\alpha\cos\gamma \\ -\sin\beta & \sin\alpha\cos\beta & \cos\alpha\cos\beta \end{pmatrix} \begin{pmatrix} x \\ y \\ z \end{pmatrix}
$$

In Equation (1), the matrix obtained by rotating the xyz coordinate system through $\alpha$ around the x axis and converting it to an x'y'z' coordinate system is termed Rx($\alpha$), the matrix obtained by rotating the x'y'z' coordinate system through $\beta$ around the y' axis and converting it to a x"y"z coordinate system is termed Ry'(P), and the matrix obtained by rotating the x"y"z" coordinate system through $\gamma$ around the z" axis and converting it is termed Rz"($\gamma$). When the device-three-axis-based coordinate system shown in Fig. 2 is converted to the geodetic-datum-based coordinate system shown in Fig. 3, and when the order of rotation is defined as being first the roll rotational axis, then the pitch rotational axis, and finally the yaw rotational axis, then the rotation matrix based on the definition of Euler angles is as given in Equation (1). While, in the following explanation, all of the rotation matrices are determined on the basis of Euler angles that are calculated in the order "roll rotational axis (x axis or X axis or X' axis)", "pitch rotational axis (y axis or Y axis or Y' axis)", and "yaw rotational axis (z axis or Z axis or Z' axis)", the present invention is not to be considered as being limited by this order.

Furthermore, the rotational angles $\alpha$, $\beta$, and $\gamma$ described in Equation (1) may be considered as being the tilt angles of the orientation in which the portable device 100 is installed, with respect to the geodetic-datum-based coordinate system.

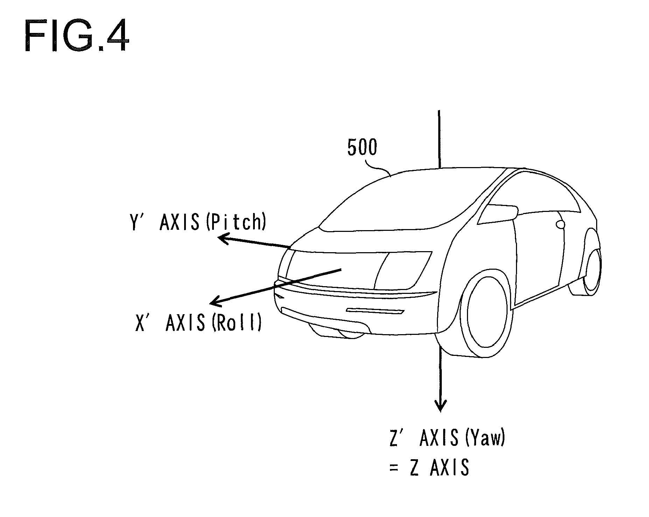

Fig. 4 shows an example of definition of the accelerations along three axes with respect to the subject vehicle.

Three acceleration axes are defined as shown in Fig. 4 with respect to a vehicle 500, which is the subject vehicle. In concrete terms: the Z' axis is defined as being the straight line that passes through the center of the vehicle 500 and the center of the Earth; the X' axis is defined as being orthogonal to the Z' axis and extending in the longitudinal direction of the vehicle 500 toward the front of the vehicle 500, in other words extending parallel to the direction of progression of the vehicle 500 when it is accelerated without the steering wheel being turned at all; and the Y' axis is defined as being the direction that is orthogonal to the Z' axis and to the X' axis and that is transverse to the vehicle 500. The positive directions of these axes are defined as follows: for the X' axis, the positive direction is the direction of progression of the vehicle; for the Y' axis, the positive direction is the direction toward the right of the direction of progression of the vehicle; and, for the Z' axis, the positive direction is the direction toward the center of the Earth. At this time, the Z' axis and the Z axis shown in Fig. 3 agree with one another. It should be understood that, in the subsequent explanation, the coordinate system in which the accelerations along three axes are expressed with reference to the vehicle 500 will be termed "the vehicle-three-axis-based coordinate system" or "the X'Y'Z' coordinate system".

It should be understood that since, in the vehicle-three-axis-based coordinate system of Fig. 4, the direction of gravity is the same as in the geodetic-datum-based coordinate system shown in Fig. 3, accordingly the position vector in this vehicle-three-axis-based coordinate system can be obtained by rotating the position vector in the geodetic-datum-based coordinate system shown in Fig. 3 around the Z axis (i.e. around the Z' axis).

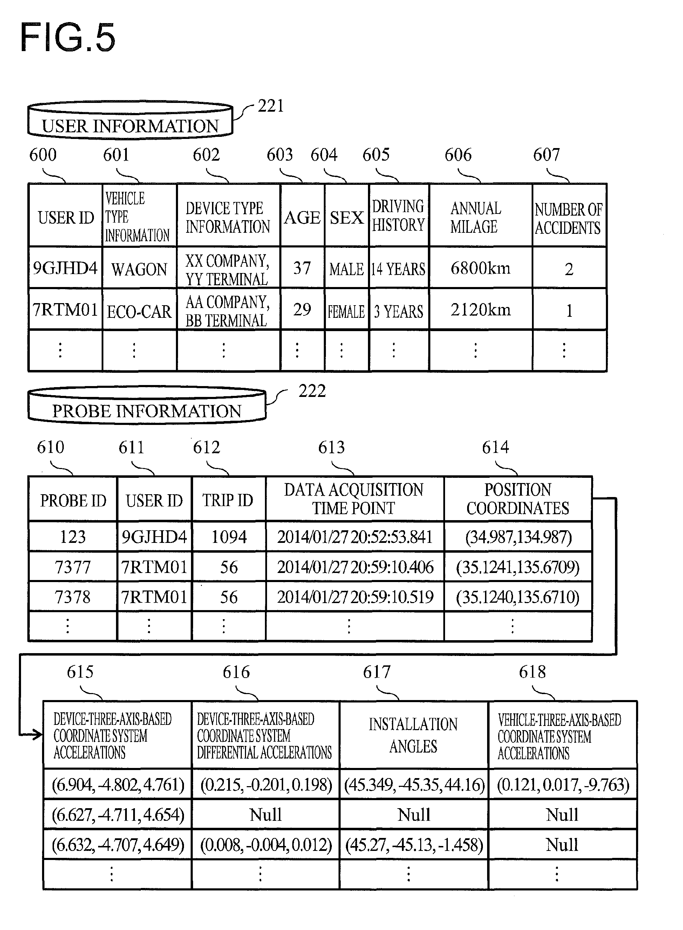

Fig. 5 shows an example of a format for the user information 221 and the probe information 222 accumulated in the storage device 220 of the telematics center 200, in this vehicle driving characteristic diagnosis system with a portable device shown in Fig. 1.

In Fig. 5, the user information 221 consists of a user ID 600, vehicle type information 601, device type information 602, the age 603, the sex 604, the driving history 605, the annual mileage 606, and the number of accidents 607.

The user ID 600 is an identifier for uniquely specifying the user (i.e. the driver) for whom probe data is uploaded. Individual unique user IDs are allocated by the telematics center 200 to portable devices 100 possessed by a plurality of users who have been registered as users of this telematics service. Information about the user IDs that have been allocated to these portable devices 100 is recorded in the storage device 220 as user IDs 600.

The vehicle type information 601 is information specifying the type of the subject vehicle that the users are driving.

The device type information 602 is information specifying the types of the portable devices 100 that are employed by the various users for driving characteristics diagnosis.

The age 603, the sex 604, and the driving history 605 respectively specify the age, the sex, and the driving history of each of the users. And the annual mileage 606 and the number of accidents 607 respectively specify the distance traveled by each user in the last year and the total number of accidents in which he or she has been involved.

In Fig. 5, each item of the probe information 222 consists of a probe ID 610, a user ID 611, a trip ID 612, a data acquisition time point 613, position coordinates 614, device-three-axis-based coordinate system accelerations 615, device-three-axis-based coordinate system differential accelerations 616, installation angles 617, and vehicle-three-axis-based coordinate system accelerations 618.

The probe ID 610 is an identifier for uniquely specifying the probe data described by the probe information 222. Probe data is transmitted to the telematics center 200 at predetermined timings from the portable devices 100 possessed by the various users to whom the previously described user IDs are allocated. When an item of probe data is received from a portable device 100, the telematics center 200 allocates an intrinsic probe ID to that item. Information about the probe IDs that have been allocated to the items of probe data in this manner is recorded in the storage device 220 as the probe IDs 610.

The user IDs 611 are information specifying the users who uploaded the probe data items, and correspond to the user IDs 600 included in the user information 221.

The trip IDs 612 are identifiers for uniquely specifying series of movements for the probe data items (i.e. trips) from departure points to destinations. In other words, when the subject vehicle shifts from a departure point to a destination, as the trip ID 612, the same identifier is attached to each item of the resulting series of probe data items gathered by the portable device 100 that is mounted to that subject vehicle.

The data acquisition time points 613 and the position coordinates 614 respectively specify the time point and the position of acquisition of the probe data items.

The device-three-axis-based coordinate system accelerations 615 are the values of the accelerations in the device-three-axis-based coordinate system that were acquired by the three-axis acceleration sensor 140 when the probe data was acquired. And the device-three-axis-based coordinate system differential accelerations 616 are values obtained by eliminating the influence of the acceleration of gravity from the values of the accelerations as expressed by the device-three-axis-based coordinate system accelerations 615.

The installation angles 617 are the angles, with respect to the geodetic-datum-based coordinate system, in which the portable device 100 was installed when the probe data items were acquired. And the vehicle-three-axis-based coordinate system accelerations 618 are the values of the accelerations in the vehicle-three-axis-based coordinate system that are obtained by converting the acceleration values in the device-three-axis-based coordinate system as given by the device-three-axis-based coordinate system accelerations 615. It should be understood that the method employed for calculation of these values will be explained in detail hereinafter.

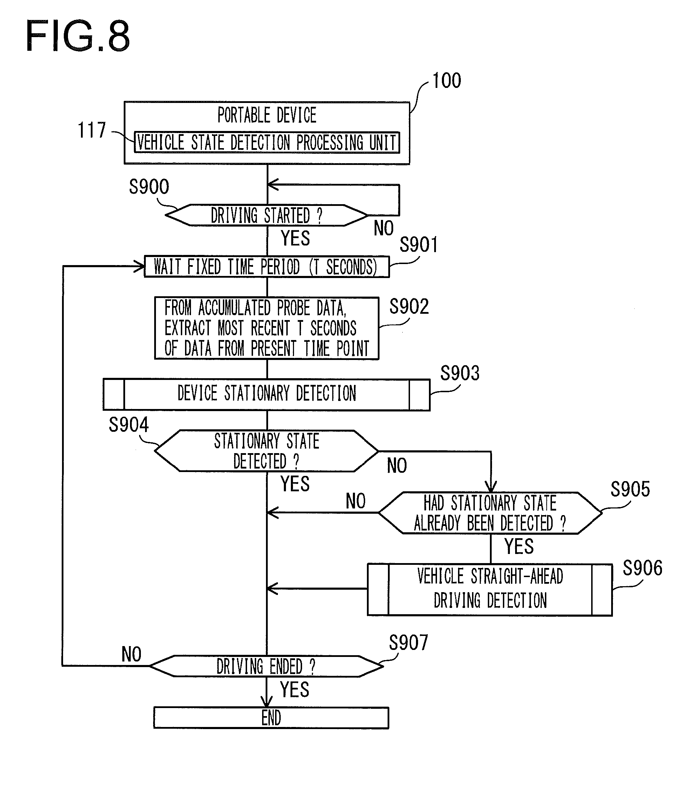

It should be understood that the values of the device-three-axis-based coordinate system differential accelerations 616 and the values of the installation angles 617 cannot be calculated if detection of a stationary state of the portable device 100, described hereinafter with reference to Fig. 8, has not yet been completed. Due to this, as shown in Fig. 5, "Null" is put for those values of the probe data at such acquisition time points.

In a similar manner, the values of the vehicle-three-axis-based coordinate system accelerations 618 cannot be calculated if detection of a straight-ahead driving state of the subject vehicle, described hereinafter with reference to Fig. 8, has not yet been completed. Due to this, as shown in Fig. 5, "Null" is put for the values of the probe data at such acquisition time points.

It should be understood that the format for the user information 121 and the probe information 122 accumulated in the storage device 120 of the portable device 100 has a similar structure to that shown in Fig. 5. However, a difference from the user information 221 and the probe information 222 of Fig. 5 is that only information relating to the user of this portable device 100 is recorded in the user information 121 and the probe information 122.

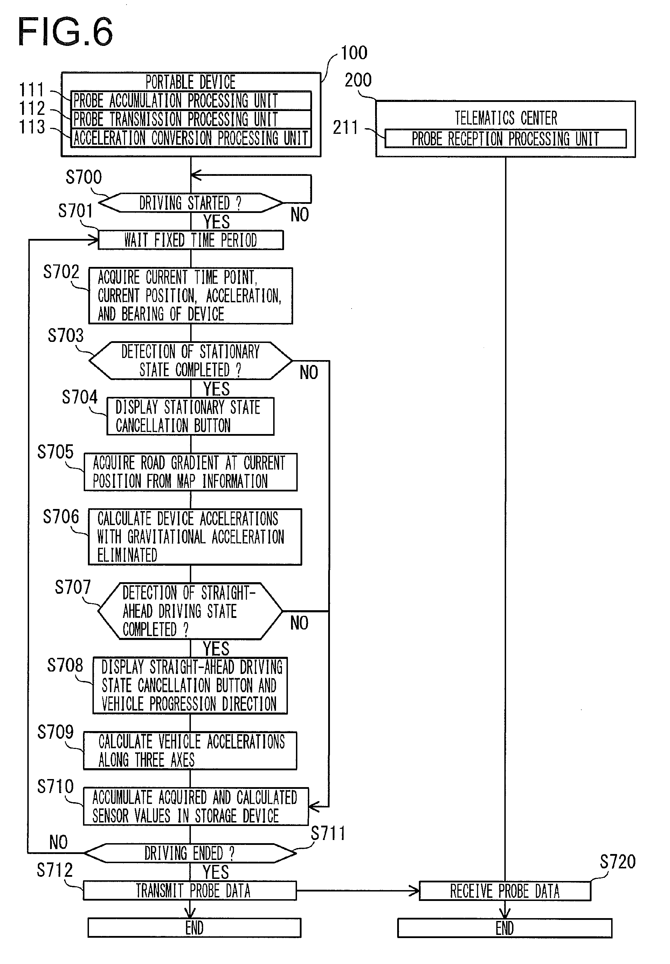

Next, certain processing flows executed by the portable device 100 and the telematics center 200 in this vehicle driving characteristic diagnosis system with a portable device shown in Fig. 1 will be explained with reference to the flow charts shown in Fig. 6 through Fig. 8. It should be understood that the processing flows shown below in Fig. 6 through Fig. 8 are for, after having detected shifting of the subject vehicle and after having implemented the necessary calculations, deriving a rotation matrix that converts the device-three-axis-based coordinate system into the vehicle-three-axis-based coordinate system. Due to this, the objective of these processing flows is to convert the accelerations in three axial directions detected by the three-axis acceleration sensor 140 of the portable device 100 into accelerations in the longitudinal, in the transverse, and in the vertical direction of the subject vehicle. It should be understood that the explanation of the specific embodiment described hereinafter assumes that the processing flows performed by the portable device 100 shown in Fig. 6 through Fig. 8 are all performed in parallel. However, it would also be possible for the processing flows shown in Fig. 6 through Fig. 8 not all to be performed in parallel.

A flow of processing is shown in Fig. 6 related to gathering and accumulation of probe information by the probe accumulation processing unit 111, the probe transmission processing unit 112, and the acceleration conversion processing unit 113 of the portable device 100, and by the probe reception processing unit 211 of the telematics center 200. The processing of this flow shown in Fig. 6 is executed by predetermined programs being executed by the calculation device 110 of the portable device 100 and by the calculation device 210 of the telematics center 200.

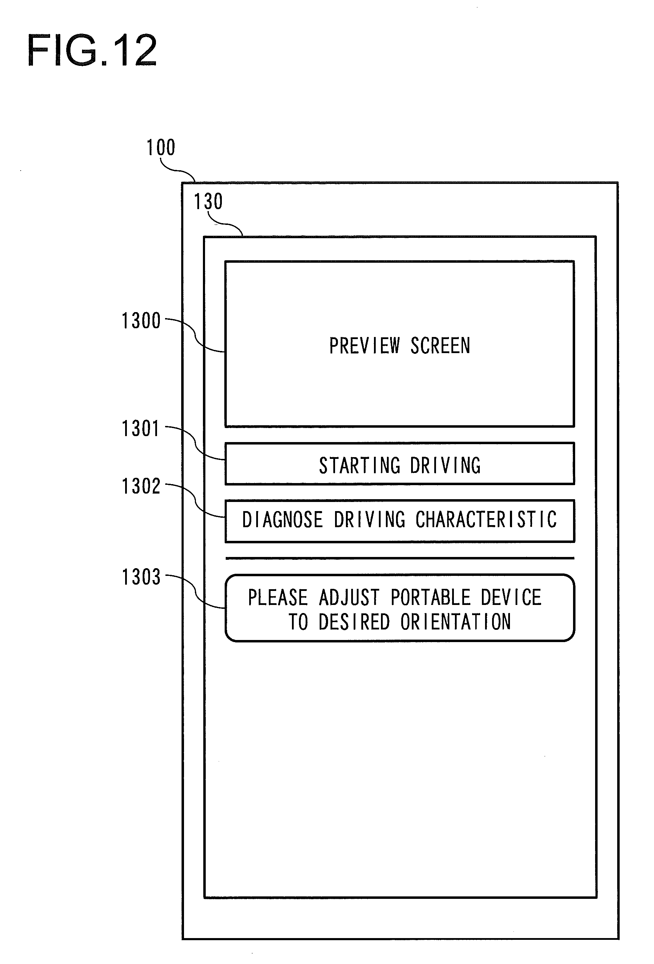

In Fig. 6, the probe accumulation processing unit 111 of the portable device 100 checks whether or not the portable device 100 is installed to the subject vehicle, in other words is installed to the vehicle 500 shown in Fig. 4, and whether or not the driver has started to drive the subject vehicle (S700). As a method for detecting the start of driving, there may be considered the method of, before driving has started, displaying a button 1301 for inputting "starting driving" upon the input/output device 130, and deciding that driving has started when the driver presses this button 1301, as for example shown in Fig. 12. Or it would also be acceptable to use change of a value of a sensor of the portable device 100 as a standard for determining that driving has started. For example, if an acceleration value detected by the three-axis acceleration sensor 140 has exceeded some fixed value, or if the position information detected by the position measurement sensor 150 has changed abruptly, or the like, then it may be decided that driving has started.

If the probe accumulation processing unit 111 has not been able to detect that driving has started (NO in S700), then the decision processing of S700 is repeatedly executed in order to check repeatedly whether driving has started. It should be understood that, if pressing of the button 1301 is chosen as the method for indicating the start of driving as described above, then S700 could be an event driven process. However, if change of a sensor value chosen for indicating the start of driving as described above, then the loop processing of S700 will be suitable.

But if the probe accumulation processing unit 111 has detected the start of driving (YES in S700), then a trip ID 612 is generated as a unique value in order to identify the following series of driving actions from the start of driving until its end. Thereafter, after having waited for a fixed time period (S701), then the accelerations, the current position, and the bearings of the portable device 100 in the device-three-axis-based coordinate system, and the date and time of acquisition of those sensor values, are acquired from the three-axis acceleration sensor 140, from the position measurement sensor 150, and from the three-axis geomagnetism sensor 170 (S702). It should be understood that the position information for the portable device 100 may be taken as being the position information for the subject vehicle.

Moreover, it should be understood that it would also be acceptable not to implement the processing of waiting for a fixed time period in S701, but to acquire the sensor values from the various sensors in real time, provided that the calculation device 110 of the portable device 100 is capable of handling such processing.

Next, the acceleration conversion processing unit 113 performs processing to convert the accelerations in the device-three-axis-based coordinate system that have been acquired by the probe accumulation processing unit 111 into the vehicle-three-axis-based coordinate system. First, the acceleration conversion processing unit 113 checks that detection of the stationary state of the portable device 100 has been completed (S703). The method for this detection of the stationary state will be described hereinafter with reference to Fig. 8.

If the stationary state of the portable device 100 has not yet been detected (NO in S703), then it is not possible to calculate the accelerations in the vehicle-three-axis-based coordinate system. Due to this, the acceleration conversion processing unit 113 terminates its processing, and the flow of control is transferred to S710 that will be described hereinafter.

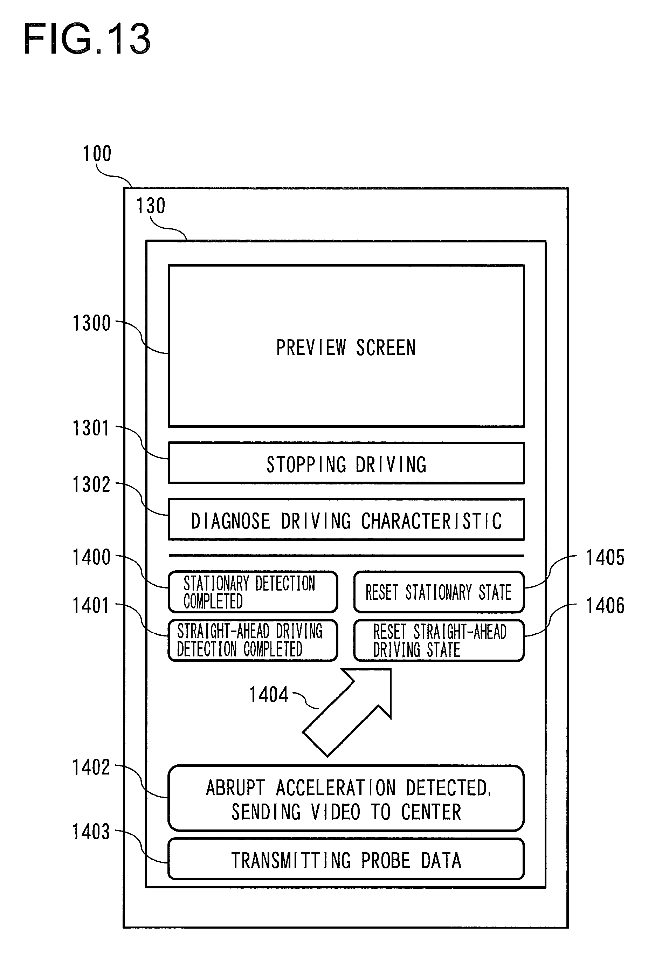

But if detection of the stationary state of the portable device 100 has been completed (YES in S703), then, first, the acceleration conversion processing unit 113 displays (S704) a button 1405 that will be described hereinafter shown in Fig. 13 upon the input/output device 130, in order to make it possible, in response to a command from the driver, for the completion of detection of the stationary state of the portable device 100 to be cancelled. And, from the map information 124 accumulated in the storage device 120, gradient angle information with respect to the bearings of the portable device 100 for the road at the current position acquired in S702 is acquired (S705) as being information that specifies the inclination of the road upon which the subject vehicle is traveling. Subsequently, this gradient angle acquired in S705 is expressed as an X axis rotational angle LCx and a Y axis rotational angle LCy in the geodetic-datum-based coordinate system. It should be understood that it will be supposed that these two rotational angles specify rotational angles in the Euler system when the geodetic-datum-based coordinate system is subjected to rotation around the Y axis and then rotation around the X axis in that order. Moreover, it should be understood that it would also be acceptable to omit S705 if no consideration needs to be given to the road gradient information.

Next, on the basis of the accelerations in the device-three-axis-based coordinate system, among the sensor values acquired in S702, the acceleration conversion processing unit 113 calculates the accelerations of the portable device 100 with the acceleration of gravity eliminated (S706). Here, it is possible to calculate the accelerations of the portable device 100 with the acceleration of gravity eliminated by subtracting the values of the accelerations in three axes in the device-three-axis-based coordinate system that were detected when it was determined that the portable device 100 was in the stationary state from the values of the accelerations in three axes in the device-three-axis-based coordinate system acquired in S702. It should be understood that the decision as to whether or not the portable device 100 is in the stationary state is performed by the vehicle state detection processing unit 117 in S903 of Fig. 8 that will be described hereinafter.

Moreover, it should be understood that no consideration is given to the road gradient angle at the current position in the accelerations in the device-three-axis-based coordinate system that are detected when the portable device 100 is in the stationary state. Due to this, if consideration is to be given to the road gradient angle, it is desirable to perform conversion by rotating the accelerations in the device-three-axis-based coordinate system that were obtained when the portable device 100 was stationary by using the X axis rotational angle LCx and the Y axis rotational angle LCy specifying the road gradient angle that were acquired in S705, and to subtract the results from the accelerations in the device-three-axis-based coordinate system that were acquired in the step S702. At this time, if the portable device 100 is oriented due North, then the X axis rotational angle LCx and the Y axis rotational angle LCy that were acquired in S705 are respectively equivalent to the roll rotational angle (around the x axis) and the pitch rotational angle (around the y axis). On the other hand, if the portable device 100 is not oriented due North, then it is necessary to derive the roll rotational angle and the pitch rotation angle in the device-three-axis-based coordinate system according to the bearings of the device that were acquired in S702. For example, if the portable device 100 is oriented due East, then the X axis rotational angle LCx corresponds to the pitch rotational angle (around the y axis) in the device-three-axis-based coordinate system, while the Y axis rotational angle LCy corresponds to the roll rotational angle in the device-three-axis-based coordinate system. In this manner, the rotational angles for roll and pitch in the device-three-axis-based coordinate system are calculated from the road gradient angle on the basis of the bearings acquired in S702, and rotation conversion is performed upon the accelerations in the device-three-axis-based coordinate system that were obtained when the vehicle was stationary. In concrete terms, upon a road whose gradient has the X axis rotational angle LCx and the Y axis rotational angle LCy, if the device 100 whose bearing is A (i.e. whose difference from the direction of North is A) is installed so as to be parallel to the road, then the gradient angle with respect to the x axis becomes arctan(tan(LCx)sin(A)+tan(LCy)cos(A)), while the gradient angle with respect to the y axis becomes arctan(tan(LCx)cos(A)-tan(LCy)sin(A)).

By doing as described above, after having corrected the accelerations detected by the three-axis acceleration sensor 140 on the basis of the inclination of the road upon which the subject vehicle is traveling, it is possible to calculate the acceleration of the portable device 100 with the acceleration of gravity eliminated. On the other hand, if the gradient angle of the road is to be ignored, then it is possible to calculate the acceleration of the portable device 100 with the acceleration of gravity eliminated from the accelerations in the device-three-axis-based coordinate system that were acquired in S702 by simply subtracting the values of the accelerations in the device-three-axis-based coordinate system when the vehicle was stationary just as they are without alteration.

Next, the acceleration conversion processing unit 113 checks whether or not detection of the straight-ahead driving state of the subject vehicle has been completed (S707). The method by which the straight-ahead driving state is detected will be described hereinafter with reference to Fig. 8.

If the straight-ahead driving state of the subject vehicle has not yet been detected (NO in S707), then it is not possible to calculate the accelerations in the vehicle-three-axis-based coordinate system. Due to this, the acceleration conversion processing unit 113 terminates its processing, and the flow of control is transferred to S710, which will be described hereinafter.

But if detection of the straight-ahead driving state of the subject vehicle has been completed (YES in S707), then the acceleration conversion processing unit 113 displays a button 1406 shown in Fig. 13 which will be described hereinafter upon the input/output device 130 (S708), in order to make it possible, in response to a command from the driver, for the completion of detection of the straight-ahead driving state of the subject vehicle to be cancelled. Furthermore, in S708, in order to specify the direction of progression of the subject vehicle, an image of an arrow sign 1404 shown in Fig. 13 which will be described hereinafter is displayed upon the input/output device 130. And the accelerations of the subject vehicle are calculated (S709) on the basis of the accelerations in the device-three-axis-based coordinate system, which are among the sensor values that were acquired in S702. Here, it is possible to calculate the accelerations of the subject vehicle in three axes by performing matrix rotation calculation upon the accelerations along three axes in the device-three-axis-based coordinate system that were acquired in S702, using rotational angles $\varphi$, $\theta$, and $\Psi$ for conversion from the device-three-axis-based coordinate system to the vehicle-three-axis-based coordinate system. This matrix rotation calculation is performed according to a calculation equation that will be described hereinafter and that is shown as Equation (6).

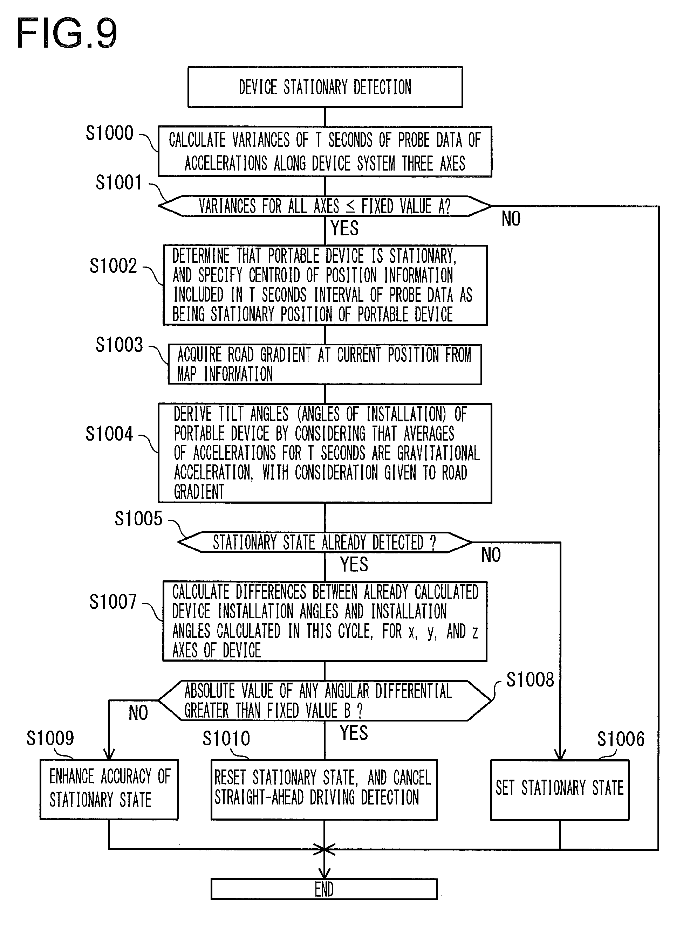

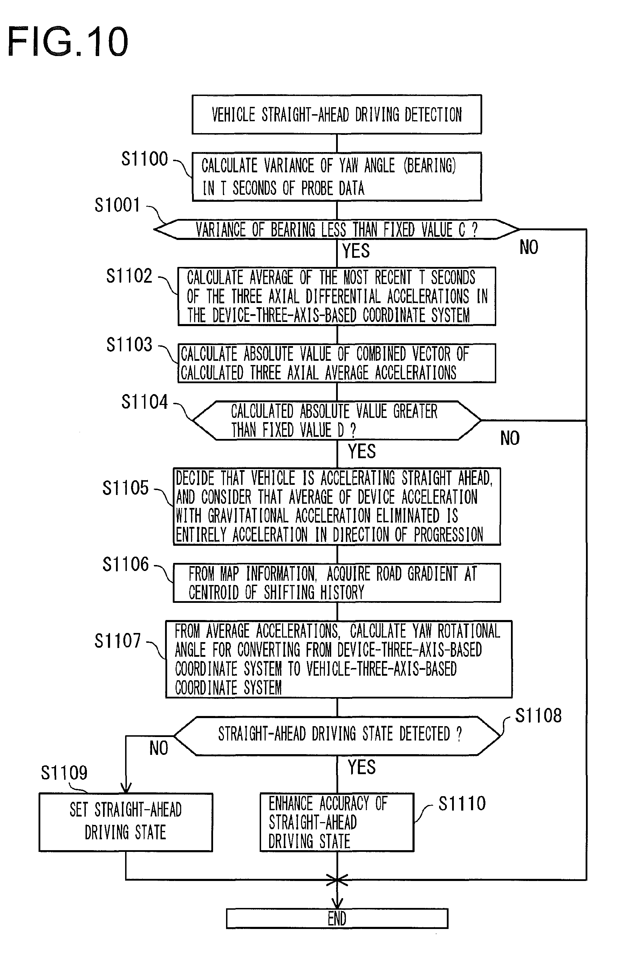

It should be understood that the rotational angles $\varphi$ and $\theta$ are angles that are calculated by the vehicle state detection processing unit 117 in S1004 of Fig. 9 which will be described hereinafter as respectively being the tilt angles around the x axis and around the y axis of the device-three-axis-based coordinate system with respect to the X axis and the Y axis of the geodetic-datum-based coordinate system, when the portable device 100 is in the stationary state. On the other hand, the rotational angle $\Psi$ is an angle that is calculated by the vehicle state detection processing unit 117 in S1107 of Fig. 10 which will be described hereinafter as being the rotational angle around the z" axis of the x" axis of the device-three-axis-based coordinate system with respect to the X' axis of the vehicle-three-axis-based coordinate system that specifies the direction of progression of the subject vehicle, when the subject vehicle is in the straight-ahead driving state. This rotational angle $\Psi$ is employed in order to determine the orientation of the image of an arrow sign 1404 in S708. Here, as will be explained hereinafter, the x" axis and the z" axis respectively specify the x axis and the z axis after rotational conversion according to the rotational angles $\varphi$ and $\theta$. In other words, in the step S709, it is possible to convert the accelerations in the device-three-axis-based coordinate system detected by the three axis acceleration sensor 140 to accelerations of the subject vehicle on the basis of the tilt angles of the portable device 100 and the angle of rotation of the portable device 100 with respect to the direction of progression of the subject vehicle.

It should be understood that, with the rotational angles $\varphi$, $\theta$, and $\Psi$ described above, no consideration is given to the road gradient angle at the current position. Due to this, if consideration is to be given to the road gradient angle, then it is desirable to perform the matrix rotation calculation according to the equation shown in Equation (6) after having converted the X axis rotational angle LCx and the Y axis rotational angle LCy that specify the gradient angle of the road acquired in S705 to rotational angles of the x axis and the y axis, in consideration of the bearings of the portable device 100 in a similar manner to that done in the processing shown in S706, and moreover after having added them to the rotational angles $\varphi$ and $\theta$ respectively. By doing this, after having corrected the tilt angles of the portable device 100 on the basis of the inclination of the road upon which the subject vehicle is traveling, it is possible to convert the accelerations detected by the three-axis acceleration sensor 140 into accelerations of the subject vehicle. On the other hand, if the gradient angle is to be ignored, then it is possible to convert the accelerations detected by the three-axis acceleration sensor 140 into accelerations of the subject vehicle by employing the rotational angles $\varphi$ and $\theta$ just as they are without alteration.

Next, the probe accumulation processing unit 111 stores the sensor values acquired in S702 by the sensors of the portable device 100, the values of the accelerations of the portable device 100 and of the subject vehicle that were calculated in S706 and S709 respectively, and the tilt angles of the portable device 100 that are calculated in S1004 of Fig. 9 which will be described hereinafter, in the storage device 120 as probe information 122 (S710). However, if at least one of S706 and S709 has not been executed, then, as previously described, "Null" is inputted as the respectively corresponding value. In concrete terms, if S706 has not been executed, then "Null" is inputted for the device-three-axis-based coordinate system differential accelerations 616 and for the installation angles 617 of Fig. 5; and, if S709 has not been executed, then "Null" is inputted for the vehicle-three-axis-based coordinate system accelerations 618. Moreover, at this time, a probe ID 610, the trip ID 612 generated in S700, and the user ID 611 are appended and are stored in the storage device 120. A unique value is generated for the probe ID 610 when storing.

Next, the probe accumulation processing unit 111 checks whether or not the driver has stopped driving (S711). As the method for checking whether driving has ended, for example, as shown in Fig. 13, the method may be considered of, after driving has started, installing a button 1301 upon the input/output device 130 for inputting "stopping driving", and of determining that driving has ended when the driver presses this button 1301. Or, it would also be possible to employ change of the sensor values of the portable device 100 as a reference for determining that driving has ended. For example, it may be determined that driving has ended if some value detected by the three-axis acceleration sensor 140 or the position information detected by the position measurement sensor 150 has not fluctuated for at least a fixed time period, or the like. In this case, it would be acceptable to determine the time point that driving ended retroactively from the time point that S711 was executed.

If the probe accumulation processing unit 111 has not been able to detect that driving has ended (NO in S711), then the flow of control returns to S701 in order to perform accumulation of probe data again.

But if the probe accumulation processing unit 111 has detected that driving has ended (YES in S711), then the probe transmission processing unit 112 transmits to the telematics center 200 the probe data that has been gathered from the driving during the present episode and has been accumulated as probe information 122 in the storage device 120 (S712). It should be understood that, if pressing of the button 1301 is considered as being the end of driving as described above, then S711 may be implemented by event driven processing. Moreover, if change of a sensor value is to be considered as being driving ending, then S711 may be implemented by loop processing. Yet further, it would also be acceptable not to transmit the probe data that has been continuously gathered from the start of driving to the telematics center 200 all together when driving ends, but instead to transmit the probe data to the telematics center 200 periodically.

The probe data transmitted from the portable device 100 is received by the probe reception processing unit 211 of the telematics center 200, and this probe data that is received is accumulated in the storage device 220 as the probe information 222 (S720).

The processing related to gathering and accumulation of probe information is executed as explained above by the probe accumulation processing unit 111, the probe transmission processing unit 112, and the acceleration conversion processing unit 113 of the portable device 100, and by the probe reception processing unit 211 of the telematics center 200.

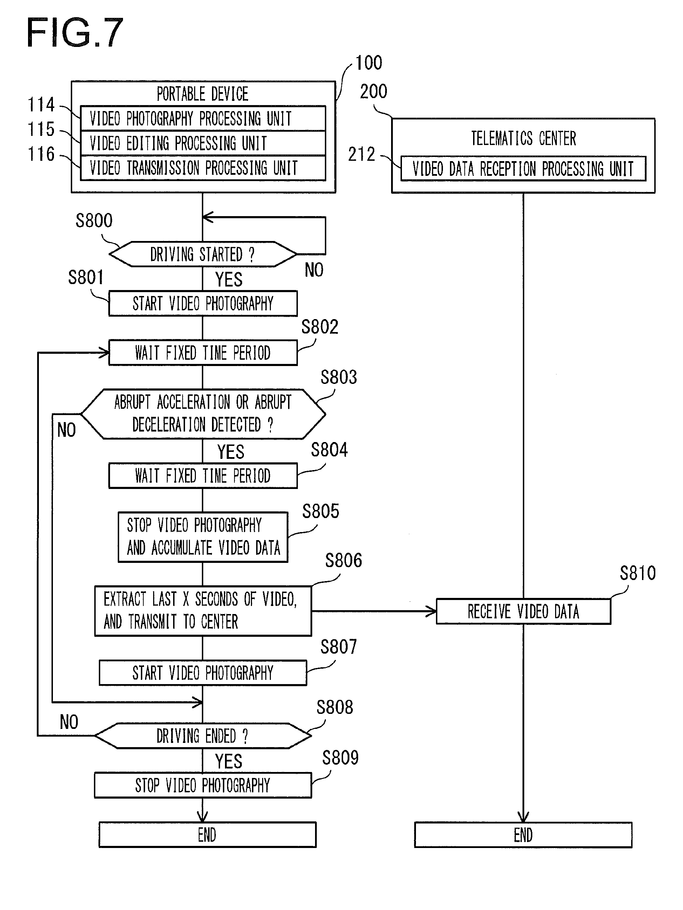

A flow of processing is shown in Fig. 7 related to gathering and accumulation of video data by the video photography processing unit 114, the video editing processing unit 115, and the video transmission processing unit 116 of the portable device 100, and by the video data reception processing unit 212 of the telematics center 200. The processing of this flow shown in Fig. 7 is executed by predetermined programs being executed by the calculation device 110 of the portable device 100 and by the calculation device 210 of the telematics center 200.

In Fig. 7, the video photography processing unit 114 of the portable device 100 checks whether or not the portable device 100 is installed to the subject vehicle, in other words to the vehicle 500 shown in Fig. 4, and whether or not the driver has started driving (S800). This processing is the same as that of S700 in the processing flow of Fig. 6, described above. It should be understood that it would also be acceptable to unify the processing of S700 and S800.

If the video photography processing unit 114 has not been able to detect that driving has started (NO in S800), then the decision processing of S800 is executed continually in order repeatedly to check whether or not driving has been started.

But if the video photography processing unit 114 has detected that driving has started (YES in S800), then, using the camera 160, photography of a driving video related to the driving view from the subject vehicle is started (S801). Subsequently the system waits for a fixed time period (S802), and then checks whether or not the portable device 100 has detected abrupt acceleration or abrupt deceleration of the subject vehicle (S803). It should be understood that the processing for waiting for a fixed time period in S802 is not absolutely necessary; it would also be acceptable for this processing not to be performed, in other words for the waiting time period to be zero seconds. It is considered that abrupt acceleration or deceleration of the subject vehicle is fundamentally generated by abrupt accelerator operation, abrupt brake operation, or abrupt steering operation. Accordingly, as a means for checking upon abrupt acceleration or abrupt deceleration in S803, the method may be considered of checking whether or not the value of the acceleration of the subject vehicle calculated in S709 of Fig. 6, in other words the value of the acceleration of the subject vehicle in the longitudinal direction or in the transverse direction in the vehicle-three-axis-based coordinate system, is at least a certain fixed value. It should be understood that, supposing that S709 has not been executed, then, for example, it would also be acceptable to use, as a means for checking upon abrupt acceleration or deceleration, whether or not the sum of the squares of the values of the accelerations in the device-three-axis-based coordinate system acquired in S702 is at least a certain fixed value.

If the video photography processing unit 114 has not been able to detect abrupt acceleration or deceleration (NO in S803), then video photography is continued, and the flow of control is transferred to S808.

But, if the video photography processing unit 114 has detected abrupt acceleration or deceleration (YES in S803), then, after the system has waited for a fixed time period (S804), the photography of this driving video terminates. Due to this, the timing of ending of photography of the driving video is determined on the basis of the acceleration of the subject vehicle that was detected in S803 as being abrupt acceleration or abrupt deceleration, and photography is terminated according to this timing. And the video data from the start to the end of photography is accumulated in the storage device 120 as video data 123 (S805).

Subsequently, among the video data 123 that has been accumulated in the storage device 120 in S805, the video editing processing unit 115 takes a time point just a fixed number of seconds before when photography was terminated as a start point, and extracts the video data from this point until the time point of the end of photography. And this video data that has been extracted is transmitted to the telematics center 200 by the video transmission processing unit 116 (S806). The video data reception processing unit 212 of the telematics center 200 receives this video data that has been transmitted from the portable device 100 in S806, and accumulates this received video data as video data 223 in the storage device 220 (S810). And, after having executed S806, the portable device 100 resumes photography of driving video (S807), and then the flow of control proceeds to S808. It should be understood that, generally, a long time is required for video editing and transmission of video data. Due to this, it would also be acceptable for the video editing processing unit 115 and the video transmission processing unit 116 to operate asynchronously from the video photography processing unit 114. In other words, it would be acceptable for the video photography processing unit 114 to execute S807 immediately after having executed S805.

Then, after having performed the processing for checking upon abrupt acceleration or deceleration processing as described above in S803, the video photography processing unit 114 checks whether or not the driver has stopped driving (S808). This processing is the same as that of S711 in the processing flow of Fig. 6, described above. It should be understood that it would also be acceptable to unify the processing of S711 and S808.

If the video photography processing unit 114 has not been able to detect that driving has ended (NO in S808), then the flow of control returns to S802 in order to check again for a second time whether abrupt acceleration or deceleration is taking place.

But if the video photography processing unit 114 has detected that driving has ended (YES in S808), then photography of this driving video by the camera 160 is terminated (S809).

As has been explained above, processing related to the gathering and accumulation of video data is executed by the video photography processing unit 114, the video editing processing unit 115, and the video transmission processing unit 116 of the portable device 100, and by the video data reception processing unit 212 of the telematics center 200.

A flow of processing related to the calculation of the matrix for rotation from the device-three-axis-based coordinate system to the vehicle-three-axis-based coordinate system by the vehicle state detection processing unit 117 of the portable device 100 is shown in Fig. 8. The processing of this flow shown in Fig. 8 is executed by a predetermined program being executed by the calculation device 110 of the portable device 100.

Referring to Fig. 8, the vehicle state detection processing unit 117 of the portable device 100 checks whether or not the portable device 100 is installed to the subject vehicle, in other words to the vehicle 500 shown in Fig. 4, and whether or not the driver has started driving (S900). This processing is the same as that of S700 in the processing flow of Fig. 6 and that of S800 in the processing flow of Fig. 7 described above. It should be understood that it would also be acceptable to unify the processing of S700, S800, and S900.

If the vehicle state detection processing unit 117 has not been able to detect that driving has been started (NO in S900), then the decision processing of S900 is executed continuously, in order again to check upon the starting of driving.

But if the vehicle state detection processing unit 117 has detected that driving has been started (YES in S900), then, after having waited for a fixed time period (T seconds) (S901), the probe data over T seconds before the present time point is extracted (S902) from the probe data that has been accumulated in S710 of Fig. 6 from the start of driving in the storage device 120 as probe information 122. The processing of S902 is executed repeatedly every T seconds. Due to this, the probe data extracted in S902 means the probe data that has been accumulated by the probe accumulation processing unit 111 subsequent to the previous time that S902 was executed. It should be understood that the range of probe data extracted in S902 is not limited to being that described above. For example, it would also be acceptable for the probe data range to be fixed at one second or the like, and not to depend upon the number of seconds that the system waited for the fixed time period in S901.

Next, on the basis of the probe data that was extracted in S902, the vehicle state detection processing unit 117 performs device stationary detection for determining as to whether or not the portable device 100 is in the stationary state (S903). The details of this processing of S903 will be described hereinafter with reference to the processing flow of Fig. 9. From the result of executing S903 it is checked whether or not, during the interval for which probe data was extracted in S902, the portable device 100 has been in the stationary (i.e. stopped )state (S904).

If the vehicle state detection processing unit 117 has not been able to detect that the portable device 100 is in the stationary state (NO in S904), then it is determined that the portable device 100 is not in the stationary state, either because the subject vehicle is in the state of being driven, or because the driver has moved the portable device 100 (i.e. has adjusted its position). In this case, in order to check whether it is necessary to execute vehicle straight-ahead driving detection in S906, the vehicle state detection processing unit 117 checks whether or not the stationary state has already been detected by the processing of S903 during the previous cycle of this processing (S905).

If, subsequent to the starting of the trip this time, the stationary state has not yet been detected even once (NO in S905), then it is not possible to detect the straight-ahead driving state of the subject vehicle. Due to this, the vehicle straight-ahead driving detection of S906 is not executed, and the flow of control proceeds to S907.

If the stationary state has already been detected subsequent to the starting of the trip this time (YES in S905), then the vehicle straight-ahead driving detection is executed in S906, in order to check whether or not the subject vehicle is in the straight-ahead driving state. The details of this processing in S906 will be described hereinafter with reference to the processing flow of Fig. 10. After S906 has been executed, the flow of control proceeds to S907.

Furthermore, if the vehicle state detection processing unit 117 has detected the stationary state of the portable device 100 (YES in S904), then it is decided that the subject vehicle is stationary. Due to this, the vehicle straight-ahead driving detection of S906 is not performed, and the flow of control proceeds to S907.

Here, after having executed S904, S905, or S906, the vehicle state detection processing unit 117 checks whether or not the driver has ended driving (S907). This processing is the same as that performed in S711 of the processing flow of Fig. 6, and as that performed in S808 of the processing flow of Fig. 7 described above. It should be understood that it would also be possible to unify the processing of S711, S808, and S907.

If the vehicle state detection processing unit 117 has not been able to detect that driving has ended (NO in S907), then the flow of control returns to S901 in order again to check upon the newest vehicle state.

But if the vehicle state detection processing unit 117 has detected that driving has ended (YES in S907), then processing terminates.

Fig. 9 shows the flow of the processing for device stationary detection executed in S903 of Fig. 8.

In Fig. 9, for the T seconds of probe data extracted in S902 of Fig. 8, the vehicle state detection processing unit 117 calculates the variances of the sensor values from the three-axis acceleration sensor 140 for each of the x axis, the y axis, and the z axis that have been acquired in the device-three-axis-based coordinate system (S1000). And next the vehicle state detection processing unit 117 checks whether or not the variances of all of the sensor acceleration values along the three axes calculated in S1000 are less than or equal to a fixed value A (S1001).

If the variances of the sensor acceleration values for the three axes are not all less than or equal to the fixed value A (NO in S1001), then it is determined that the portable device 100 is not in the stationary state, and this processing for device stationary detection is terminated.

But if the variances of the sensor acceleration values for the three axes are all less than or equal to the fixed value A (YES in S1001), then it is determined that the portable device 100 is in the stationary state. In this case, the centroid of the positions specified by the position information included in the T seconds of probe data extracted in S902 of Fig. 8 is specified as being the position where the portable device 100 is stationary (S1002). It should be understood that it would also be acceptable to utilize, as the stationary position of the portable device 100, not this centroid, but rather, for example, the position specified by the position information included in the data for the newest time point in the T seconds of probe data.

Due to the processing of S 1000 through S1003 as explained above, the portable device 100 is able to detect its own stationary state on the basis of the change in the accelerations detected by the three-axis acceleration sensor 140.

Next, the vehicle state detection processing unit 117 acquires, as the road gradient at the current position, gradient angle information for the road at the stationary position specified in S1002 from the map information 124 stored in the storage device 120 (S1003). At this time, it is possible to acquire the X axis rotational angle and the Y axis rotational angle in the geodetic-datum-based coordinate system by acquiring the Northward orientation with respect to the current position as a reference. Subsequently, the road gradient angle that has been acquired in this S1003 is taken as being specified by the X axis rotational angle LSx and the Y axis rotational angle LSy in the geodetic-datum-based coordinate system. It should be understood that it will be supposed that these two rotational angles specify rotational angles in the Euler system when the geodetic-datum-based coordinate system is subjected, in order, to a Y axis rotation and then to an X axis rotation. Moreover, it should be understood that, if no consideration is to be given to the road gradient information, then S1003 may be omitted.

Next, the vehicle state detection processing unit 117 calculates the tilt angles (i.e. the angles of installation) of the portable device 100 with respect to the geodetic-datum-based coordinate system, on the basis of the sensor values from the three-axis acceleration sensor 140 included in the T seconds of probe data that were extracted in S902. Here, considering that the sensor acceleration values for the various axes specify the acceleration of gravity, the tilt angles of the portable device 100 are calculated using the calculation equations shown as Equations (2), (3), and (4) below:

Equation (2)

$$
\begin{pmatrix} x \\ y \\ z \end{pmatrix} = R_x(-\alpha)R_{y'}(-\beta)R_{z''}(-\gamma)\begin{pmatrix} X \\ Y \\ Z \end{pmatrix}
$$

Equation (3)

$$
\begin{aligned}
\begin{pmatrix} G_x \\ G_y \\ G_z \end{pmatrix} &= R_x(-\alpha)R_{y'}(-\beta)R_{z''}(-\gamma)\begin{pmatrix} 0 \\ 0 \\ G \end{pmatrix} \\
&= \begin{pmatrix} 1 & 0 & 0 \\ 0 & \cos\alpha & \sin\alpha \\ 0 & -\sin\alpha & \cos\alpha \end{pmatrix}\begin{pmatrix} \cos\beta & 0 & -\sin\beta \\ 0 & 1 & 0 \\ \sin\beta & 0 & \cos\beta \end{pmatrix}\begin{pmatrix} \cos\gamma & \sin\gamma & 0 \\ -\sin\gamma & \cos\gamma & 0 \\ 0 & 0 & 1 \end{pmatrix}\begin{pmatrix} 0 \\ 0 \\ G \end{pmatrix} \\
&= \begin{pmatrix} 1 & 0 & 0 \\ 0 & \cos\alpha & \sin\alpha \\ 0 & -\sin\alpha & \cos\alpha \end{pmatrix}\begin{pmatrix} \cos\beta\cos\gamma & \cos\beta\sin\gamma & -\sin\beta \\ -\sin\gamma & \cos\gamma & 0 \\ \sin\beta\cos\gamma & \sin\beta\sin\gamma & \cos\beta \end{pmatrix}\begin{pmatrix} 0 \\ 0 \\ G \end{pmatrix} \\
&= \begin{pmatrix} \cos\beta\cos\gamma & \cos\beta\sin\gamma & -\sin\beta \\ -\cos\alpha\sin\gamma+\sin\alpha\sin\beta\cos\gamma & \cos\alpha\cos\gamma+\sin\alpha\sin\beta\sin\gamma & \sin\alpha\cos\beta \\ \sin\alpha\sin\gamma+\cos\alpha\sin\beta\cos\gamma & -\sin\alpha\cos\gamma+\cos\alpha\sin\beta\sin\gamma & \cos\alpha\cos\beta \end{pmatrix}\begin{pmatrix} 0 \\ 0 \\ G \end{pmatrix} \\
&= \begin{pmatrix} -G\sin\beta \\ G\sin\alpha\cos\beta \\ G\cos\alpha\cos\beta \end{pmatrix}
\end{aligned}
$$

## Equation (4)

$$G = \sqrt{G_x{}^2 + G_y{}^2 + G_z{}^2}$$

Equation (2) is a variant obtained by multiplying both sides of Equation (1) described above by the inverse matrix of each of Rx($\alpha$), Ry'($\beta$), and Rz"($\gamma$), from the left in order. In other words, since the inverse matrix of the rotation matrix about each of the axes (for example Rx($\alpha$)) is the same as the rotation matrix with the sign of the rotational angle changed (for example Rx(-$\alpha$)), accordingly the equation shown in Equation (2) can be obtained.

It should be understood that the average values of the accelerations along the x axis, the y axis, and the z axis in the T seconds of probe data extracted in S902 (when respectively expressed as Gx, Gy, and Gz) specify the acceleration of gravity along the Z axis in the geodetic-datum-based coordinate system. Accordingly, if the road gradient angle is ignored, on the basis of Equation (1), when the average values (Gx, Gy, and Gz) of the accelerations in the device-three-axis-based coordinate system are rotated on the basis of the tilt angles ($\alpha$, $\beta$, and $\gamma$) of the portable device 100, they may be considered as agreeing with the accelerations (0,0,G) in the geodetic-datum-based coordinate system. Here, as shown in Equation (4), G is the square root of the sum of the squares of Gx, Gy, and Gz, and means the acceleration of gravity.

By employing the conditions described above and performing conversion on the basis of Equation (2), the equality shown as Equation (3) holds. Here, since Gx, Gy, Gz, and G are already known values, accordingly it is possible to calculate the rotational angle $\alpha$ around the x axis and the rotational angle $\beta$ around the y axis. In other words, it is possible to ascertain the angles of tilt of the portable device 100. It should be understood that, as shown by Equation (3), since rotation around the yaw rotational axis (through the rotational angle $\gamma$) is rotational movement around the z axis of the portable device 100, accordingly it does not exert any influence upon the sensor acceleration values along the x axis, the y axis, and the z axis. Therefore the rotational angle $\gamma$ that specifies rotation around the yaw rotational axis is derived from the sensor value of the three-axis geomagnetism sensor 170, which is included in the T seconds of probe data. In the following, the tilt angles $\alpha$, $\beta$, and $\gamma$ of the portable device 100 that are calculated in S1004 will respectively be denoted by $\varphi$, $\theta$, and $\delta$.

Among the tilt angles $\varphi$, $\theta$, and $\delta$ of the portable device 100 calculated in S1004, the gradient angle of the road is included in both the tilt angles $\varphi$ that corresponds to the rotational angle about the x axis and also in the tilt angles $\theta$ that corresponds to the rotational angle about the y axis. Due to this, if consideration is to be given to the gradient angle of the road, first, in a similar manner to the processing shown in S706, the road gradients LSx and LSy that were acquired in S1003 are converted into rotational angles around the x axis and the y axis, with consideration being given to the bearings of the portable device 100. And the values obtained by subtracting these converted values from the tilt angles $\varphi$ and $\theta$ are obtained as being the tilt angles $\varphi$ and $\theta$ of the portable device 100 on a flat ground surface. By doing this, it is possible to correct the tilt angles $\varphi$, $\theta$, and $\delta$ of the portable device 100 on the basis of the slope of the road upon which the subject vehicle is traveling. Furthermore, the gradient angle of the road also exerts an influence upon the average values of the accelerations along the x axis, the y axis, and the z axis in the T seconds of probe data that are used when calculating the tilt angles of the portable device 100 in S1004. Due to this, it is desirable to accumulate data in which this influence has been eliminated by matrix rotating it by the road gradient angle that was acquired in S1003.

It should be understood that while, in the example described above, the average values of the accelerations along the x axis, the y axis, and the z axis in the T seconds of probe data were employed as Gx, Gy, and Gz, it would also be acceptable, for example, instead to employ the sensor values at the most recent time point. Moreover, since there is a possibility that the values from the three-axis acceleration sensor 140 may include error, it would also be acceptable not to derive the acceleration of gravity by using Equation (4), but to employ a fixed value (for example G=9.80665).

Next, the vehicle state detection processing unit 117 checks whether or not the stationary state of the portable device 100 has already been detected in the device stationary detection that was executed the previous time during this trip (S1005).

If the stationary state of the portable device 100 has not been detected in the previous cycle (NO in S1005), then this time of detection is the first time. In this case, the vehicle state detection processing unit 117 performs setting of a "stationary state" flag that indicates that the portable device 100 is in the stationary state (S1006). And the tilt angles $\varphi$, $\theta$, and $\delta$ of the portable device 100 that were calculated in S1004 are stored in a predetermined storage region within the calculation device 110.

But if the stationary state of the portable device 100 was detected in the previous cycle as well (YES in S1005), then the differences between the tilt angles $\varphi$, $\theta$, and $\delta$ of the portable device 100 that have already been calculated and the tilt angles $\varphi$, $\theta$, and $\delta$ of the portable device 100 that were calculated in this cycle are calculated (S1007). And a check is made as to whether any one of the absolute values of these differences that have thus been calculated is greater than a fixed value B (S1008).

If all of the absolute values of the differences of the tilt angles are less than the fixed value B (NO in S1008), then it can be determined that the angles of installation of the portable device 100 have not greatly changed. In this case, in order to enhance the accuracy of the angles of installation of the portable device 100, the average values of the tilt angles $\varphi$, $\theta$, and $\delta$ that were obtained from the previous stationary detection reset to the present time point are stored as the tilt angles of the portable device 100 in the stationary state (S1009).

But if even one of the absolute values of the differences of the tilt angles is greater than the fixed value B (YES in S1008), then it may be supposed that the angles of installation of the portable device 100 have changed greatly, in other words the driver has moved the portable device 100. Therefore, the tilt angles $\varphi$, $\theta$, and $\delta$ that have been calculated in this cycle are stored as the new angles of installation of the portable device 100, and after having set the stationary state again, the state of detection of the straight-ahead driving state of the subject vehicle is reset to the not-yet-detected state (S1010).

The processing for device stationary detection is performed in S903 of Fig. 8 as explained above.

The flow of the processing executed in S906 of Fig. 8 for vehicle straight-ahead driving detection is shown in Fig. 10.

In Fig. 10, the vehicle state detection processing unit 117 calculates the variance of the yaw rotational angle (i.e. the variance of the bearing) of the portable device 100 in the T seconds of probe data obtained by the three-axis geomagnetism sensor 170 and extracted in S902 of Fig. 8 (S1100). And the vehicle state detection processing unit 117 checks whether or not the calculated value of the variance of the bearing is less than a fixed value C(S1101).

If the variance of the bearing value is not less than the fixed value C (NO in S1101), then it is determined that the subject vehicle is not shifting straight ahead in its direction of progression and is not traveling in such a manner that the value of the bearing is constant, and then this processing for vehicle straight-ahead driving detection terminates. For example, if the subject vehicle is traveling upon a road that curves to the right or to the left, then the bearing will not have a constant value.

But if the variance of the bearing value is less than the fixed value C (YES in S1101), then it is determined that the subject vehicle is in the straight-ahead driving state. In this case, the averages of the differential accelerations in the device-three-axis-based coordinate system included in the T seconds of probe data extracted in S902 of Fig. 8, in other words the averages of the device-three-axis-based coordinate system differential accelerations 616 of Fig. 5, are calculated (S1102). It should be understood that, when performing this vehicle straight-ahead driving detection of Fig. 10, since it has already been checked in S905 of Fig. 8 whether or not detection of the stationary state of the portable device 100 has been completed, accordingly it is certainly possible to acquire the differential accelerations in the device-three-axis-based coordinate system. In the following, the average values of the differential accelerations in the device-three-axis-based coordinate system calculated in S1102 for the x axis, the y axis, and the z axis of the device-three-axis-based coordinate system will be referred to as Mx, My, and Mz in order.

Next, the vehicle state detection processing unit 117 calculates the square root M of the sum of the squares of the average values Mx, My, and Mz of the differential accelerations in the device-three-axis-based coordinate system calculated in S1102 (S1103). Here, M is calculated by employing the calculation equation shown as Equation (5) below:

$$\text{Equation (5)}$$

$$M = \sqrt{M_x{}^2 + M_y{}^2 + M_z{}^2}$$

If the average values of the differential accelerations in the device-three-axis-based coordinate system are considered as a vector, then the value of M calculated in S1103 is equivalent to the absolute value of this vector. Accordingly, the value of M corresponds to the average of the accelerations of the subject vehicle in the longitudinal, transverse, and vertical directions detected by the portable device 100 over an interval of T seconds.

It should be understood that it would also be acceptable to perform the processing of S1103 by using, not the average values Mx, My, and Mz of the differential accelerations in the device-three-axis-based coordinate system as calculated in S1102, but rather the totals of the values of the differential accelerations in the device-three-axis-based coordinate system.

Next, the vehicle state detection processing unit 117 checks whether or not the value of M calculated in S1103, in other words the average value of the accelerations of the portable device 100 with the acceleration of gravity eliminated, is greater than a fixed value D(S1104).

If the value of M calculated in S1103 is less than the fixed value D (NO in S 1104), then the subject vehicle is almost not moving at all, and as a result it is possible to determine that the values of the differential accelerations in the device-three-axis-based coordinate system detected by the portable device 100 are, for all axes, close to almost zero. In other words, it is possible to determine that the subject vehicle is not moving straight ahead, but is almost stationary.

In this case, it is determined that the subject vehicle is not in the straight-ahead driving state, and this processing for vehicle straight-ahead driving detection terminates.

But if the value of M calculated in S 1103 is greater than the fixed value D (YES in S1104), then it can be determined that the bearing is almost not fluctuating at all, and moreover that there has been some change of the acceleration in the device-three-axis-based coordinate system due to shifting of the subject vehicle. Due to this it is determined that, in this case, the subject vehicle is traveling in the straight ahead direction, and that the absolute value of the vector given by the value of M calculated in S1103 completely specifies the entire acceleration of the vehicle in the longitudinal direction (S 1105).

Due to the processing of S1100 through S1105 as explained above, when the stationary state of the portable device 100 has been detected by the device stationary detection processing of Fig. 9, the portable device 100 is able to detect the straight-ahead driving state of the subject vehicle on the basis of change of the bearing detected by the three-axis geomagnetism sensor 170 and change of the accelerations detected by the three-axis acceleration sensor 140.

It should be understood that the method employed for determining whether or not the subject vehicle is traveling in the straight ahead direction may not be the method explained above in S1101 and S1104 of using the amounts of change of the bearing and the amounts of change of the accelerations. For example, it would also be acceptable to determine whether or not the subject vehicle is traveling in the straight ahead direction on the basis of the amounts of change of only one of the bearing and the accelerations. Moreover, it would also be possible to determine whether or not the subject vehicle is traveling in the straight ahead direction by employing position information, such as whether or not the change of the position coordinates of the portable device 100 over an interval of T seconds is greater than some constant amount, or the like. In other words, it is possible to make the determination as to whether or not the subject vehicle is traveling in the straight ahead direction on the basis of change of at least one of the bearing, the position, and the accelerations detected by the various sensors.

Moreover, when the portable device 100 is installed to the subject vehicle, normally, it ought to be installed in such a state that the display surface of the input/output device 130 faces toward the driver. Accordingly, if the subject vehicle is accelerated, an acceleration in the positive direction of the z axis ought to be detected; and, conversely, if the subject vehicle is decelerated or is being reversed, an acceleration in the negative direction of the z axis ought to be detected. Thus, by utilizing this fact, it would also be possible to determine that the subject vehicle is decelerating or is being reversed if, among the average values Mx, My, and Mz of the differential accelerations in the device-three-axis-based coordinate system calculated in S 1102, the average value Mz along the z axis is negative, and to handle this as the NO branch in the condition of S 1104.

Next, from the map information 124 stored in the storage device 120, the vehicle state detection processing unit 117 acquires information about the gradient angle of the road at the position coordinates of the centroid of the shifting track of the subject vehicle as specified in the T seconds of probe data that was extracted in S902 of Fig. 8, as being the road gradient when the subject vehicle is moving straight ahead (S1106). At this time, it is possible to acquire the X axis rotational angle and the Y axis rotational angle of the geodetic-datum-based coordinate system by acquiring the Northward orientation with respect to the current position as a reference. Subsequently, it will be supposed that the gradient angle of the road acquired in S 1106 is given by the X axis rotational angle LDx and the Y axis rotational angle LDy of the geodetic-datum-based coordinate system. It should be understood that it will be supposed that these two rotational angles give rotational angles in the Euler system when, in a similar manner to the case in S 1003 of Fig. 9, the geodetic-datum-based coordinate system is subjected in order to a Y axis rotation and then to an X axis rotation. Moreover, it should be understood that S 1106 may be omitted if no consideration is to be given to the road gradient information.

Furthermore, in S1106, it would also be acceptable to utilize, not the centroid of the shifting track of the subject vehicle as specified in the probe data over T seconds, but rather the gradient angle of the road at some specific point upon the shifting track, for example at the position coordinates of the newest time point upon the path.

And, on the basis of the sensor values from the three-axis acceleration sensor 140 included in the T seconds of probe data extracted in S902, the vehicle state detection processing unit 117 calculates the yaw rotational angle for converting the device-three-axis-based coordinate system to the vehicle-three-axis-based coordinate system, in other words it calculates the rotational angle of the portable device 100 with respect to the direction of progression of the subject vehicle (S1107). Here, the yaw rotational angle is calculated by employing the calculation equations shown in Equations (6), (7), and (8) below:

$$\text{Equation (6)}$$

$$\begin{pmatrix} X' \\ Y' \\ Z' \end{pmatrix} = R_{z''}(\psi)R_{y'}(\theta)R_x(\phi) \begin{pmatrix} x \\ y \\ z \end{pmatrix}$$

Equation (7)

$$\begin{pmatrix} M \\ 0 \\ 0 \end{pmatrix} = R_{z''}(\psi)R_{y'}(\theta)R_x(\phi)\begin{pmatrix} M_x \\ M_y \\ M_z \end{pmatrix} = R_{z''}(\psi)\begin{pmatrix} x_\psi \\ y_\psi \\ 0 \end{pmatrix} = R_Z(\psi)\begin{pmatrix} x_\psi \\ y_\psi \\ 0 \end{pmatrix}$$

Equation (8)

$$\begin{pmatrix} M \\ 0 \\ 0 \end{pmatrix} = R_Z(\psi)\begin{pmatrix} x_\psi \\ y_\psi \\ 0 \end{pmatrix} = \begin{pmatrix} \cos\psi & -\sin\psi & 0 \\ \sin\psi & \cos\psi & 0 \\ 0 & 0 & 1 \end{pmatrix}\begin{pmatrix} x_\psi \\ y_\psi \\ 0 \end{pmatrix}$$

$$= \begin{pmatrix} x_\psi \cos\psi - y_\psi \sin\psi \\ x_\psi \sin\psi + y_\psi \cos\psi \\ 0 \end{pmatrix}$$

Equation (6) gives the rotation matrix that, on the basis of definitions similar to those for Equation (1) described above, converts the xyz coordinate system to the X'Y'Z' coordinate system by rotating the xyz coordinate system through φ around the x axis, by then performing a rotation through θ around the Y' axis, and by then performing a rotation through Ψ around the z" axis.

Here, the φ and θ calculated in S1004 of Fig. 9 as being the tilt angles of the portable device 100 may be used for the values of φ and θ.

If the gradient angle of the road is ignored, then the rotation matrix given by Rx(φ)Ry'(θ) in Equations (6) and (7) is a portion of the rotation matrix for converting the device-three-axis-based coordinate system to the geodetic-datum-based coordinate system, and does not include any rotation component around the z" axis. In other words, this rotation matrix is equivalent to a rotation matrix for converting the orientation of the portable device 100 to an orientation such that both the x axis and the y axis become parallel to the surface of the ground (however, the x axis is not limited to being oriented North). At this time, the z" axis coincides with the Z axis.

Due to this, as shown in Equation (7), when the average values Mx, My, and Mz of the differential accelerations in the device-three-axis-based coordinate system calculated in S1102 are rotated with the rotation matrix Rx(φ)Ry'(θ), the value of the acceleration in the z" direction certainly is zero. Thus, according to Equation (7), when the values obtained by rotating Mx, My, and Mz with the rotation matrix Rx(φ)Ry'(θ) are expressed as values xΨ, yΨ, 0, it is possible to convert this xΨ, yΨ, 0 to values in the vehicle-three-axis-based coordinate system by a rotation through an appropriate rotational angle Ψ around the z" axis, since the vehicle-three-axis-based coordinate system is obtained by rotating the geodetic-datum-based coordinate system around the Z axis (i.e. around the Z' axis). At this time, since Mx, My, and Mz were calculated in S1102 from the probe data obtained while the subject vehicle was moving straight ahead, accordingly their values xΨ, yΨ, 0 after rotation will agree with M, 0, 0 for the X' axis, the Y' axis, and the Z' axis in that order.

Accordingly, by converting Equation (7), the equality shown in Equation (8) results. In Equation (8), all of the values of M, xΨ, and yΨ are either already known or can be calculated. Accordingly, from Equation (8), the rotational angle Ψ around the z axis can be calculated. The rotational angles φ, θ, and Ψ for converting the device-three-axis-based coordinate system to the vehicle-three-axis-based coordinate system can be obtained from this rotational angle Ψ and from the tilt angles φ and θ of the portable device 100 that were calculated in S1004 of Fig. 9.

It should be understood that the average values Mx, My, and Mz of the differential accelerations in the device-three-axis-based coordinate system are values that include not only the tilt angles of the portable device 100, but also include the gradient angle of the road. Accordingly, if consideration is to be given to the gradient angle of the road, then, even if Mx, My, and Mz are rotated by the rotation matrix Rx(φ)Ry'(θ) described above, the orientation of the portable device 100 will only have been converted to such an orientation that the x axis and the y axis become parallel to the road surface, but will not have been converted to such an orientation as to become parallel to a flat road surface. Accordingly, in this case, after the road gradients LDx and LDy that were acquired in

S 1106 have been converted into the rotational angles LDx' and LDy' around the x axis and the y axis while giving consideration to the bearings of the portable device 100 in a similar manner to the case of the processing shown in S706, the values of the rotational angle φ around the x axis and the rotational angle θ around the y axis among the rotational angles φ, θ, and Ψ are used in the rotation matrix after these values LDx' and LDy[1] have been subtracted from them. In other words, Rx(φ-LDx')Ry'(θ-LDy') is used as the rotation matrix. Furthermore in this case, φ-LDx', θ-LDy', and Ψ are viewed as being the respective rotational angles φ, θ, and Ψ for converting the device-three-axis-based coordinate system to the vehicle-three-axis-based coordinate system. Due to this, it is possible to correct the rotational angles φ, θ, and Ψ, not on the basis of the inclination of the road surface upon which the subject vehicle is traveling, but rather on the basis of a flat ground surface.

Next, the vehicle state detection processing unit 117 checks that the straight-ahead driving state of the subject vehicle has already been detected in the vehicle straight-ahead driving detection that has been previously executed during this trip (S1108).

If the straight-ahead driving state of the subject vehicle has not been previously detected (NO in S 1108), then the detection this time is the first one. In this case, the vehicle state detection processing unit 117 performs setting of a flag "straight-ahead driving-state" that shows that the subject vehicle is in the straight-ahead driving state (S1009). And the rotational angles φ, θ, and Ψ for converting the device-three-axis-based coordinate system to the vehicle-three-axis-based coordinate system that were calculated in S 1107 are stored in a predetermined storage region in the calculation device 110.

But if the straight-ahead driving state of the subject vehicle has been previously detected (YES in S 1108), then, in order to enhance the accuracy of the rotational angles for converting from the device-three-axis-based coordinate system to the vehicle-three-axis-based coordinate system, the average values of the rotational angles φ, θ, and Ψ that have been obtained from the previous straight-ahead driving detection reset to the present time are stored as the rotational angles for converting the device-three-axis-based coordinate system to the vehicle-three-axis-based coordinate system (S1010).

The processing for vehicle straight-ahead driving detection is performed in S906 of Fig. 8 as explained above.

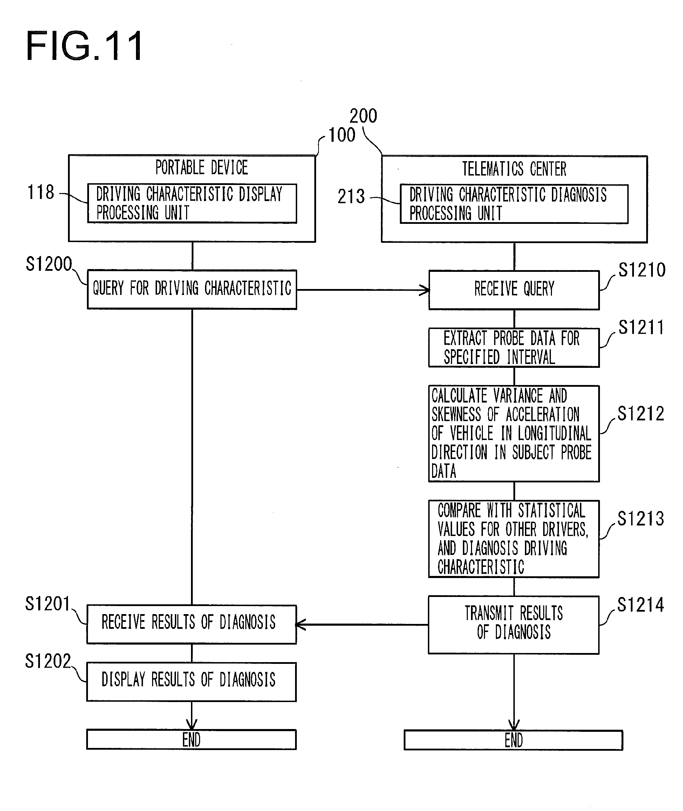

Fig. 11 shows a flow of processing related to diagnosis of the driving characteristic of the driver and to display of the results of this diagnosis, performed by the driving characteristic display processing unit 118 of the portable device 100 and by the driving characteristic diagnosis processing unit 213 of the telematics center 200. The processing shown in this processing flow of Fig. 11 is executed by the calculation device 110 of the portable device 100 and the calculation device 210 of the telematics center 200 performing respective predetermined programs.

Referring to Fig. 11, according to a demand from the driver, the driving characteristic display processing unit 118 queries the telematics center 200 for the results of diagnosis of the driving characteristic of that subject driver (S1200). As the method for issuing this query, as shown for example in Fig. 12, the method may be contemplated of installing a button 1302 on the input/output device 130 for inputting "display driving diagnosis results", and determining that it is necessary to issue a query for diagnosis of driving characteristic when the driver presses this button 1302, or the like. Furthermore, at the time of the query, the user ID for specifying the driver who has issued the query is also transmitted together with the query.

The driving characteristic diagnosis processing unit 213 of the telematics center 200 receives this query for the results of driving characteristic diagnosis from the portable device 100 (S 1210). And, among the probe information 222 accumulated in the storage device 220, the driving characteristic diagnosis processing unit 213 extracts the probe data corresponding to the user ID included in the query that has been received as being the probe data that is to be utilized in driving diagnosis (S1211). At this time, it would also be acceptable to limit the range of extraction of the probe data that is to be the subject. The method may be contemplated of setting an range for extraction by taking some time period as a reference, such as for example the previous one year up to the date and time of the query, or the like. It should be understood that it would also be acceptable for the driver to input a period to be designated as the range for extraction via the portable device 100.

Next, on the basis of the probe data extracted in S1211, the driving characteristic diagnosis processing unit 213 calculates the variance and the skewness thereof as statistical values that show the tendency of this driver with regard to acceleration of the subject vehicle in the longitudinal direction (S1212). Furthermore, after having also extracted the probe data over the same subject interval for a plurality of drivers who resemble the subject driver, the variance and the skewness are also calculated in a similar manner as statistical values that show the tendencies of those drivers with regard to vehicle acceleration. As the method for specifying the resemblance of drivers, for example, it may be contemplated to utilize, as a condition, the fact that, in the driver information included in the user information 221, the details of the vehicle type information 601 or the age 603 or the like resemble or agree with one another. And the statistical values for this driver who posed the query are compared with the statistical values of this plurality of other drivers, and thereby diagnosis of the driving characteristic of this driver is calculated (S1213). As the calculation method for this driving characteristic diagnosis, various types of per se known technique may be employed. And after having extracted, from the video data 223, video that has been uploaded for the subject interval, this video is transmitted to the portable device 100 together with the results of diagnosis (S1214).

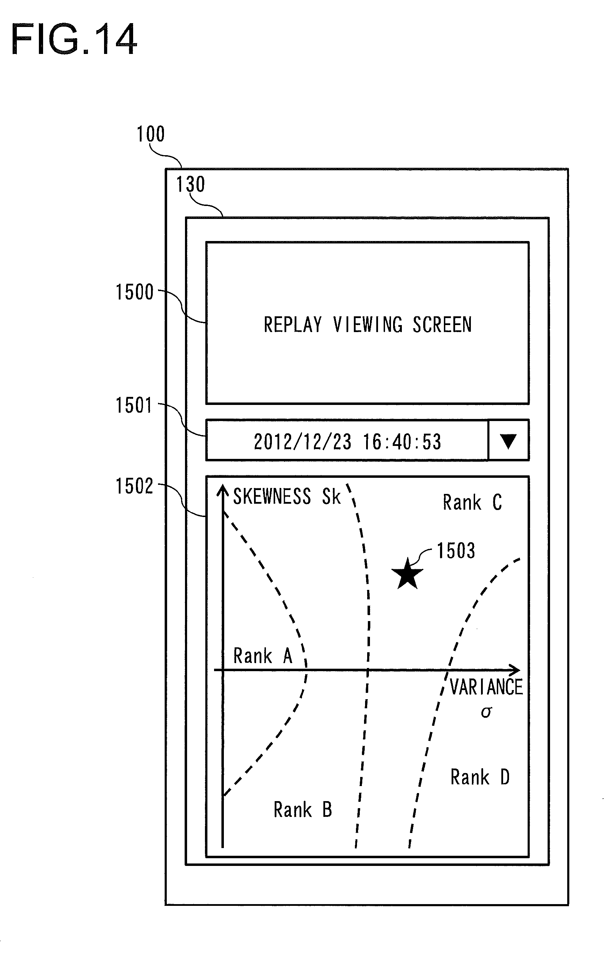

The driving characteristic display processing unit 118 of the portable device 100 receives the driving characteristic diagnosis results that have been transmitted from the telematics center 200 (S1201). Subsequently these driving characteristic diagnosis results that have been received are displayed upon the input/output device 130, for example via the screen of Fig. 14, together with replayed video in the neighborhood of any abrupt acceleration or deceleration that may have been detected (S1202).

Fig. 12 shows an example of a screen that is displayed upon the input/output device 130 of the portable device 100 before driving of the subject vehicle is started.

In Fig. 12, a preview screen 1300 for display of the state of photography of video, a button 1301 for the driver explicitly to announce the start of driving or the end of driving, a button 1302 to be pressed by the driver in order to initiate implementation of driving characteristic diagnosis, and a notification region 1303 that displays information to be notified to the driver, are shown displayed upon the input/output device 130 of the portable device 100.

Before driving is started a legend is displayed upon the button 1301 urging the driver to press the button 1301 when starting driving, such as for example "starting driving" or the like. If the driver has pressed this button 1301, then the portable device 100 detects that driving is starting. Due to this it is possible, in S700 of Fig. 6, S800 of Fig. 7, and S900 of Fig. 8, to transition to the branching condition for the start of driving. At this time, since the photography of video is started by S801 of Fig. 7, accordingly the video image photographed by the camera 160 of the portable device 100 is displayed upon the preview screen 1300.

When the button 1302 has been pressed, S1200 of Fig. 11 is executed, and the driving characteristic diagnosis results obtained as the response in S1201 are displayed. A specific example of the method for display of these results will be described hereinafter with reference to Fig. 14.

In the shown example, a legend that urges the driver to install (i.e. to fix) the portable device 100 to the subject vehicle so that it is oriented in a desired angle is displayed in the notification region 1303.

Fig. 13 shows an example of a screen that is displayed upon the input/output device 130 of the portable device 100 after driving of the subject vehicle has been started.

In Fig. 13, in addition to a preview screen 1300, a button 1301, and a button 1302 that are similar to those shown in Fig. 12, notification regions 1400 through 1403 that display items of information to be notified to the driver, the image of an arrow sign 1404 that shows the direction of progression of the subject vehicle, and buttons 1405 and 1406 respectively for cancellation of the stationary state of the portable device 100 and for cancellation of the straight-ahead driving state of the subject vehicle that have been detected, are shown displayed upon the input/output device 130 of the portable device 100.

After driving has been started a legend is displayed upon the button 1301 urging the driver to press the button 1301 when driving of the vehicle ends, such as for example "stopping driving" or the like. If the driver has pressed this button 1301, then the portable device 100 detects that driving has ended. Due to this it is possible, in S711 of Fig. 6, S808 of Fig. 7, and S907 of Fig. 8, to transition to the branching condition for the end of driving.

After driving of the subject vehicle has started, a legend is displayed in the notification region 1400 giving information as to whether or not the stationary state of the portable device 100 has been detected by the device stationary detection performed in S903 of Fig. 8. And a legend is displayed in the notification region 1401 giving information as to whether or not the straight-ahead driving state of the vehicle has been detected by the vehicle straight-ahead driving detection performed in S906 of Fig. 8 has been completed. Moreover, in the notification region 1402, a legend is displayed giving information as to whether or not abrupt acceleration or deceleration has been detected in S803 of Fig. 7, and also a legend is displayed giving information as to whether or not video data photographed in S805 is being transmitted to the telematics center 200. Here, it would also be acceptable to display the detailed cause for this video data to be transmitted, such as "abrupt acceleration", "abrupt braking", "abrupt steering" or the like. When the termination of driving has been detected due to the button 1301 being pressed, a legend is displayed in the notification region 1403 to the effect that probe data is being transmitted to the telematics center 200 by S712 of Fig. 6.

After driving of the subject vehicle has commenced, when in the vehicle straight-ahead driving detection performed in S906 of Fig. 8 it is determined that the subject vehicle is traveling in the straight-ahead driving direction, the arrow sign image 1404 is displayed on the basis of the result of this determination. The orientation indicated by this arrow sign image 1404 is determined on the basis of the rotational angle of the portable device 100 around the z axis with respect to the x axis direction, in other words on the basis of the rotational angle $\Psi$ calculated in S1107 of Fig. 10

It should be understood that it would also be acceptable to display, upon the input/output device 130, a button 1405 for cancelling the stationary state of the portable device 100 that has been detected in S903 of Fig. 8, and a button 1406 for cancelling the straight-ahead driving state of the subject vehicle that has been detected in S906 of Fig. 8. When the button 1405 is pressed, irrespective of the result of processing by the vehicle state detection processing unit 117 up until the present moment, the stationary state of the portable device 100 and the straight-ahead driving state of the subject vehicle are reset immediately. On the other hand, when the button 1406 is pressed, resetting of the stationary state of the portable device 100 is not performed, but only resetting of the straight-ahead driving state of the subject vehicle is performed. It should be understood that it would also be acceptable for the button 1405 not to be displayed when it has not yet been determined that the portable device 100 is in the stationary state, but for control to be performed so that the button 1405 is displayed directly after that decision is reached. In a similar manner, it would also be acceptable for the button 1406 not to be displayed when it has not yet been determined that the subject vehicle is in the straight-ahead driving state, but for control to be performed so that the button 1406 is displayed directly after that decision is reached.

Fig. 14 shows an example of a screen that is displayed upon the input/output device 130 of the portable device 100 for presentation of vehicle driving characteristic diagnosis results.

In Fig. 14, a replay viewing screen 1500 for replaying video that has been previously photographed, a button 1501 for selecting video for replay, and a diagnosis results display region 1502 for displaying the results of driving characteristic diagnosis are displayed on the input/output device 130 of the portable device 100.

When a video has been selected by using the button 1501 on the replay viewing screen 1500, that video is replayed. As a method for selection of that video, for example, the method may be contemplated of displaying the dates and times of photography of videos in a pull-down format, and receiving a selection by the driver from that list, or the like. It should be understood that, as the method of selection, for example, it would also be acceptable to adopt a method in which a map screen is displayed, icons are placed in the positions upon the map in which video photography has been performed, and selection of an icon by the driver is received, or the like.

Statistical values for the acceleration of the subject vehicle in the longitudinal direction are displayed by S1202 of Fig. 11 in the diagnosis results display region 1502 as the results of driving characteristic diagnosis. In concrete terms, a graphical coordinate system is displayed in the diagnosis results display region 1502 in which the magnitude of the variance of the acceleration is shown along the horizontal axis while the magnitude of the skewness of the acceleration is shown along the vertical axis, and an image 1503 is displayed at a position whose coordinates in this coordinate system correspond to the variance and the skewness of the acceleration of the subject vehicle, thus showing the results of diagnosis that have been calculated from the driving history of the driver. In addition, as shown in the figure, boundary lines are displayed for separating the graphical coordinate system into a plurality of regions, and, in each of these regions, a letter is displayed that gives the score (i.e. the rank) of driving characteristic diagnoses that fall within that region. The results of diagnosis of the driving characteristics of the driver are displayed in this manner.

According to this embodiment of the present invention as explained above, the following beneficial operational effects are obtained.

(1) The portable device 100 is provided with the three-axis acceleration sensor 140 that detects acceleration in three axial directions, and with the calculation device 110. And the program for the portable device 100 that is executed by the portable device 100 causes the calculation device 100 to execute: the device stationary detection processing of Fig. 9 that detects the stationary state of the portable device 100, and calculates the tilt angles of the portable device 100 in S1004; the vehicle straight-ahead driving detection processing of Fig. 10 that detects the straight-ahead driving state of the subject vehicle to which the portable device 100 is mounted, and that calculates the rotational angle of the portable device 100 with respect to the direction of progression of the subject vehicle in S1107; and the processing of S709 of Fig. 6 that converts the accelerations that have been detected by the three-axis acceleration sensor 140 into accelerations of the subject vehicle, on the basis of the tilt angles of the portable device 100 that has been calculated and the rotational angle of the portable device 100 with respect to the direction of progression of the subject vehicle. Due to this, the portable device 100 is caused to function as the vehicle state detection processing unit 117 and as the acceleration conversion processing unit 113. Since it is arranged to do this, accordingly it is possible to detect the behavior of the subject vehicle in an accurate manner by using the portable device 100 in order to diagnose the driving characteristic of the driver, irrespective of the state of installation of the portable device 100.

(2) In the device stationary detection processing of Fig. 9, in the processing of S1000 through S1003, the stationary state of the portable device 100 is detected on the basis of change of the accelerations detected by the three-axis acceleration sensor 140. Moreover, in the vehicle straight-ahead driving detection processing of Fig. 10, in S1101 through S1105, the straight-ahead driving state of the subject vehicle is detected on the basis of change of at least one of the bearings detected by the three-axis geomagnetism sensor 170, the position detected by the position measurement sensor 150, and the accelerations detected by the three-axis acceleration sensor 140. Since these arrangements are adopted, accordingly it is possible to detect the stationary state of the portable device 100 and also the moving-straight-ahead driving state of the subject vehicle in a reliable manner.

(3) In the device stationary detection processing of Fig. 9, in the processing of S1003 and S1004 and in the processing of S705 and S706 of Fig. 6, it would also be acceptable to acquire the inclination of the road upon which the subject vehicle is traveling, and to correct the tilt angles of the portable device 100 on the basis of this road inclination that has been acquired. If this is done, it is possible to convert the accelerations that have been detected by the three-axis acceleration sensor 140 into accelerations of the subject vehicle in an accurate manner, while giving consideration to the inclination of the road upon which the subject vehicle is traveling.

(4) In the processing of S708 of Fig. 6, on the basis of the rotational angle calculated by the vehicle straight-ahead driving detection processing of Fig. 10, the arrow sign image 1404 that shows the progression direction of the subject vehicle is displayed upon the input/output device 130. In other words, the program for the portable device 100 that is being executed upon the portable device 100 detects the direction of progression of the subject vehicle, and causes the portable device 100 to perform processing in order to display the direction of progression of the subject vehicle that has thus been detected upon the input/output device 130. Since it is arranged to do this, accordingly it is possible to inform the driver, in an easily understandable manner, whether or not the direction of progression of the subject vehicle is being correctly recognized by the portable device 100.

(5) In the processing of S704 of Fig. 6, the actuation button 1405 for cancelling the stationary state of the portable device 100 that has been detected by the device stationary detection processing of Fig. 9 is further displayed upon the input/output device 130, which is a touch panel. Moreover, in the processing of S708 of Fig. 6, the actuation button 1406 for cancelling the straight-ahead driving state of the subject vehicle that has been detected by the vehicle straight-ahead driving detection processing of Fig. 9 is further displayed upon the input/output device 130. Since these arrangements are adopted, accordingly, when the stationary state of the portable device 100 or the straight-ahead driving state of the subject vehicle has been mistakenly recognized by the portable device 100, it is possible rapidly to cancel either these states according to a command from the driver.

(6) The program for the portable device 100 that is executed by the portable device 100 photographs driving video with the camera 160 related to the driving view from the subject vehicle (S801), and executes processing with the calculation device 110 for determining the end timing for this photography of driving video on the basis of the accelerations of the subject vehicle (S803 through S805). Since these arrangements are adopted, accordingly, when dangerous driving such as abrupt acceleration or abrupt deceleration or the like is performed, it is possible automatically to gather driving video that shows the driving view at that time.

(7) The portable device 100 detects the accelerations of the subject vehicle to which the portable device 100 is mounted, and transmits these accelerations to the telematics center 200 (S702 and S712). And, on the basis of the acceleration history of the subject vehicle that has been transmitted from the portable device 100, the telematics center 200 performs diagnosis of the driving characteristics of the driver of the subject vehicle (S1211 through S1213). Since these arrangements are provided, accordingly it is possible to diagnose the driving characteristics of the driver in an accurate manner by utilizing the results of detection of the accelerations of the subject vehicle that are transmitted from the portable device 100.

It should be understood that while, in the embodiment explained above, an example was explained in which the diagnosis of driving characteristics was performed by the telematics center 200, it would also be acceptable to arrange for the diagnosis of driving characteristics to be performed by the portable device 100. In other words, by employing the probe information 122 that is stored in the storage device 120, it is possible to calculate the variance and the skewness of the acceleration of the subject vehicle in the longitudinal direction on the basis of the history of acceleration of the subject vehicle as detected by the three-axis acceleration sensor 140, so that it is possible to perform diagnosis of the driving characteristic of the driver on the basis of this statistical data.

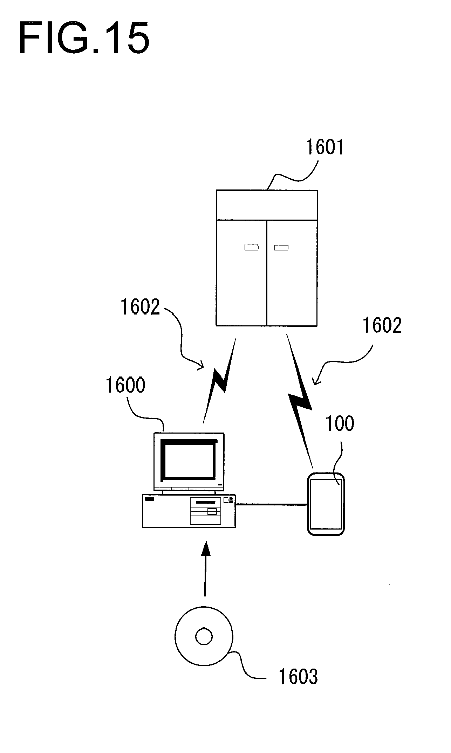

It is to be noted that the operating program described above causing the calculation device 110 to execute the processing for achieving the functions of the portable device 100 in the embodiment may be provided to the portable device 100 in a recording medium such as a CD-ROM or through an electric communication line such as the Internet. Fig. 15 shows how such a program may be provided. A personal computer 1600, which is connected with the portable device 100, provides the operating program made available from a server apparatus 1601 via a communication line 1602, or from a CD-ROM 1603 to the portable device 100. In addition, the operating program available at the server apparatus 1601 may be directly provided to the portable device 100 through the communication line 1602 by bypassing the personal computer 1600. The communication line 1602 may be the Internet, a communication network for personal computer communication or the like, a dedicated communication line, a portable telephone network or the like. The server 1601 transmits the operating program to the personal computer 1600 or the portable device 100 via the communication line 1602. Namely, the program converted to a data signal on a carrier wave is transmitted via the communication line 1602. In other words, the operating program, which can be executed at the portable device 100, may be provided as a computer-readable program product assuming any of various modes including a recording medium and a carrier wave.

The embodiment and variant embodiments described above have only been given as examples, and the present invention is not to be considered as being limited by the details thereof, provided that the essential characteristics of the present invention are preserved. Thus, the present invention is not limited to the embodiments described above; various changes are possible provided that its gist is not departed from.

**Claims**

1. A computer-readable program product containing a program for a portable device (100), the program being executed upon a portable device (100) comprising an acceleration sensor that detects accelerations in three axial directions and a calculation device (110), the program causing the calculation device (110) to execute:

a first process of detecting a stationary state of the portable device (100), and calculating tilt angles of the portable device (100);

a second process of detecting the straight-ahead driving state of a vehicle to which the portable device is mounted, and calculating a rotational angle of the portable device with respect to a direction of progression of the vehicle; and

a third process of converting the accelerations detected by the acceleration sensor (140) to accelerations of the vehicle, on the basis of the tilt angles and the rotational angle.

2.  The program product according to Claim 1, wherein:

the portable device (100) further comprises at least one of a bearings sensor that detects bearings in three axial directions, and a position sensor (150) that detects a position;

in the first process, the stationary state of the portable device is detected on the basis of change of the acceleration detected by the acceleration sensor (140); and

in the second process, when the stationary state of the portable device (100) has been detected, the straight-ahead driving state of the vehicle is detected on the basis of change of at least one of the bearings detected by the bearings sensor, the position detected by the position sensor, and the acceleration detected by the acceleration sensor (140).

3.  The program product according to Claim 1 or Claim 2, wherein:

in the first process and the third process, the calculation device is caused to acquire a gradient of a road upon which the vehicle is traveling, and to correct the tilt angles on the basis of the gradient of the road that has been acquired.

4.  The program product according to any one of Claims 1 through 3, wherein:

the portable device (100) further comprises an image display unit; and

the direction of progression of the vehicle is displayed upon the image display unit on the basis of the rotational angle.

5.  The program product according to Claim 4, wherein:

the image display unit is a touch panel; and

in addition to the direction of progression of the vehicle, at least one of an actuation button for cancelling the stationary state of the portable device (100) detected by the first process, and an actuation button for cancelling the straight-ahead driving state of the vehicle detected by the second process, is further displayed upon the touch panel.

6.  The program product according to any one of Claims 1 through 5, wherein:

the portable device (100) further comprises a camera (160) that performs video photography; and

a driving video related to a driving view from the vehicle is photographed by the camera, and processing is further executed by the calculation device to determine a timing of ending of photography of the driving video on the basis of acceleration of the vehicle.

7.  The program product according to any one of Claims 1 through 6, wherein:

driving characteristic diagnosis for the driver of the vehicle is performed by the portable device (100) on the basis of the history of acceleration of the vehicle.

8.  A computer-readable program product containing a program for a portable device, the program being executed upon a portable device (100) comprising an image display unit, the program causing the portable device (100) to execute processing to detect a direction of progression of a vehicle to which the portable device is mounted, and to display the detected direction of progression of the vehicle upon the image display unit.

9.  A portable device (100), comprising an acceleration sensor (140) that detects accelerations in three axial directions, and executing the program according to any one of Claims 1 through 8.

**10.** A vehicle driving characteristic diagnosis system, comprising:

a portable device (100) according to Claim 9; and
a center device that performs wireless communication with the portable device, wherein:

the portable device detects acceleration of a vehicle to which the portable device is mounted, and transmits the acceleration to the center device; and
the center device performs driving characteristic diagnosis for the driver of the vehicle, on the basis of the history of acceleration of the vehicle transmitted from the portable device.

**11.** A method of calculating acceleration of a vehicle to which a portable device (100) including an acceleration sensor that detects accelerations in three axial directions is mounted, the method comprising:

detecting a stationary state of the portable device, and calculating tilt angles of the portable device (100);
detecting a straight-ahead driving state of the vehicle, and calculating a rotational angle of the portable device with respect to a direction of progression of the vehicle; and
calculating the acceleration of the vehicle by converting the accelerations detected by the acceleration sensor to accelerations of the vehicle, on the basis of the tilt angles and the rotational angle.

# FIG.1

**100**

**PORTABLE DEVICE**

**120**

## STORAGE DEVICE

- **121** USER INFORMATION
- **122** PROBE INFORMATION
- **123** VIDEO DATA
- **124** MAP INFORMATION

**110**

## CALCULATION DEVICE

- **111** PROBE ACCUMULATION PROCESSING UNIT
- **112** PROBE TRANSMISSION PROCESSING UNIT
- **113** ACCELERATION CONVERSION PROCESSING UNIT
- **117** VEHICLE STATE DETECTION PROCESSING UNIT
- **114** VIDEO PHOTOGRAPHY PROCESSING UNIT
- **115** VIDEO EDITING PROCESSING UNIT
- **116** VIDEO TRANSMISSION PROCESSING UNIT
- **118** DRIVING CHARACTERISTIC DISPLAY PROCESSING UNIT

**130** INPUT/OUTPUT DEVICE

**140** THREE-AXIS ACCELERATION SENSOR

**150** POSITION MEASUREMENT SENSOR

**160** CAMERA

**180** COMMUNICATION UNIT

**170** THREE-AXIS GEOMAGNETISM SENSOR

**300**

**200**

**230** COMMUNICATION UNIT

## STORAGE DEVICE

- **221** USER INFORMATION
- **222** PROBE INFORMATION
- **223** VIDEO DATA

**220**

## CALCULATION DEVICE

- **211** PROBE RECEPTION PROCESSING UNIT
- **212** VIDEO DATA RECEPTION PROCESSING UNIT
- **213** DRIVING CHARACTERISTIC DIAGNOSIS PROCESSING UNIT

**210**

**TELEMATICS CENTER**

# FIG.2

x AXIS (Roll)

100

130

y AXIS (Pitch)

z AXIS (Yaw)

# FIG.3

# FIG.4

500

Y' AXIS (Pitch)

X' AXIS (Roll)

Z' AXIS (Yaw)
= Z AXIS

# FIG.5

USER INFORMATION ⌐221

| USER ID | VEHICLE TYPE INFORMATION | DEVICE TYPE INFORMATION | AGE | SEX | DRIVING HISTORY | ANNUAL MILAGE | NUMBER OF ACCIDENTS |
|---|---|---|---|---|---|---|---|
| 9GJHD4 | WAGON | XX COMPANY, YY TERMINAL | 37 | MALE | 14 YEARS | 6800km | 2 |
| 7RTM01 | ECO-CAR | AA COMPANY, BB TERMINAL | 29 | FEMALE | 3 YEARS | 2120km | 1 |
| ⋮ | ⋮ | ⋮ | ⋮ | ⋮ | ⋮ | ⋮ | ⋮ |

600 601 602 603 604 605 606 607

PROBE INFORMATION ⌐222

| PROBE ID | USER ID | TRIP ID | DATA ACQUISITION TIME POINT | POSITION COORDINATES |
|---|---|---|---|---|
| 123 | 9GJHD4 | 1094 | 2014/01/27 20:52:53.841 | (34.987,134.987) |
| 7377 | 7RTM01 | 56 | 2014/01/27 20:59:10.406 | (35.1241,135.6709) |
| 7378 | 7RTM01 | 56 | 2014/01/27 20:59:10.519 | (35.1240,135.6710) |
| ⋮ | ⋮ | ⋮ | ⋮ | ⋮ |

610 611 612 613 614

| DEVICE-THREE-AXIS-BASED COORDINATE SYSTEM ACCELERATIONS | DEVICE-THREE-AXIS-BASED COORDINATE SYSTEM DIFFERENTIAL ACCELERATIONS | INSTALLATION ANGLES | VEHICLE-THREE-AXIS-BASED COORDINATE SYSTEM ACCELERATIONS |
|---|---|---|---|
| (6.904, -4.802, 4.761) | (0.215, -0.201, 0.198) | (45.349, -45.35, 44.16) | (0.121, 0.017, -9.763) |
| (6.627, -4.711, 4.654) | Null | Null | Null |
| (6.632, -4.707, 4.649) | (0.008, -0.004, 0.012) | (45.27, -45.13, -1.458) | Null |
| ⋮ | ⋮ | ⋮ | ⋮ |

615 616 617 618

# FIG.6

PORTABLE DEVICE `─100`
`200`

111 ── PROBE ACCUMULATION PROCESSING UNIT
112 ── PROBE TRANSMISSION PROCESSING UNIT
113 ── ACCELERATION CONVERSION PROCESSING UNIT

TELEMATICS CENTER
211 ── PROBE RECEPTION PROCESSING UNIT

S700
S701 ─── DRIVING STARTED ? ──── NO
                    YES

WAIT FIXED TIME PERIOD

S702 ── ACQUIRE CURRENT TIME POINT, CURRENT POSITION, ACCELERATION, AND BEARING OF DEVICE

S703 ── DETECTION OF STATIONARY STATE COMPLETED ? ──── NO
                    YES

S704 ── DISPLAY STATIONARY STATE CANCELLATION BUTTON

S705 ── ACQUIRE ROAD GRADIENT AT CURRENT POSITION FROM MAP INFORMATION

S706 ── CALCULATE DEVICE ACCELERATIONS WITH GRAVITATIONAL ACCELERATION ELIMINATED

S707 ── DETECTION OF STRAIGHT-AHEAD DRIVING STATE COMPLETED ? ──── NO
                    YES

S708 ── DISPLAY STRAIGHT-AHEAD DRIVING STATE CANCELLATION BUTTON AND VEHICLE PROGRESSION DIRECTION

S709 ── CALCULATE VEHICLE ACCELERATIONS ALONG THREE AXES

S710 ── ACCUMULATE ACQUIRED AND CALCULATED SENSOR VALUES IN STORAGE DEVICE

NO ─── DRIVING ENDED ? ─── S711
                    YES

S712 ── TRANSMIT PROBE DATA ─────────→ RECEIVE PROBE DATA ── S720

END                                    END

30

# FIG.7

```
                    ┌──────────────────────────────────────┐  ╱ 100
                    │          PORTABLE DEVICE              │
        114 ────────┤ VIDEO PHOTOGRAPHY PROCESSING UNIT     │           200
        115 ────────┤ VIDEO EDITING PROCESSING UNIT         │  812  ┌──────────────────────────────────────────┐
        116 ────────┤ VIDEO TRANSMISSION PROCESSING UNIT    │       │          TELEMATICS CENTER               │
                    └──────────────────────────────────────┘   212 ─┤ VIDEO DATA RECEPTION PROCESSING UNIT     │
                                                                     └──────────────────────────────────────────┘
```

S800     DRIVING STARTED ?    NO

YES

S801    START VIDEO PHOTOGRAPHY

S802    WAIT FIXED TIME PERIOD

S803    ABRUPT ACCELERATION OR ABRUPT DECELERATION DETECTED ?    NO

YES

S804    WAIT FIXED TIME PERIOD

S805    STOP VIDEO PHOTOGRAPHY AND ACCUMULATE VIDEO DATA

S806    EXTRACT LAST X SECONDS OF VIDEO, AND TRANSMIT TO CENTER   →   S810   RECEIVE VIDEO DATA

S807    START VIDEO PHOTOGRAPHY

S808    DRIVING ENDED ?    NO

YES

S809    STOP VIDEO PHOTOGRAPHY

END        END

# FIG.8

```
                    ┌─────────────────────────────────────┐ ⟍ 100
                    │         PORTABLE DEVICE              │
        117 ⟍      │ VEHICLE STATE DETECTION PROCESSING UNIT│
                    └─────────────────────────────────────┘
                                    │
        S900 ⟋                      ▼◄──────────────────┐
              ⟨ DRIVING STARTED ? ⟩──────────┐          │
                       │          NO          │          │
                      YES        S901 ⟋       │          │
        ┌───────►┌──────────────────────────┐│          │
        │        │ WAIT FIXED TIME PERIOD (T SECONDS) ◄──┘
        │        └──────────────────────────┘
        │                     │
        │        ┌──────────────────────────┐ S902
        │        │ FROM ACCUMULATED PROBE DATA, ⟋
        │        │ EXTRACT MOST RECENT T SECONDS│
        │        │ OF DATA FROM PRESENT TIME POINT│
        │        └──────────────────────────┘
        │                     │            S903
        │        ┌──────────────────────────┐ ⟋
        │        │ DEVICE STATIONARY DETECTION │
        │        └──────────────────────────┘
        │   S904 ⟋           │
        │        ⟨   STATIONARY STATE   ⟩
        │        ⟨    DETECTED ?        ⟩────────┐
        │                 │          NO          │
        │                YES          NO  ┌───────────────────────────┐ S905
        │                 │◄─────────────⟨ HAD STATIONARY STATE        ⟩ ⟋
        │                 │              ⟨ ALREADY BEEN DETECTED ?     ⟩
        │                 │                          │
        │                 │                         YES
        │                 │              ┌───────────────────────────┐ S906
        │                 │◄─────────────│ VEHICLE STRAIGHT-AHEAD     │ ⟋
        │                 │              │ DRIVING DETECTION          │
        │                 │              └───────────────────────────┘
        │         NO      ▼                        S907
        └──────────⟨ DRIVING ENDED ? ⟩ ⟋
                          │
                         YES
                  ┌──────────────┐
                  │     END      │
                  └──────────────┘
```

# FIG.9

DEVICE STATIONARY DETECTION

S1000 — CALCULATE VARIANCES OF T SECONDS OF PROBE DATA OF ACCELERATIONS ALONG DEVICE SYSTEM THREE AXES

S1001 — VARIANCES FOR ALL AXES ≤ FIXED VALUE A?
→ NO

YES

S1002 — DETERMINE THAT PORTABLE DEVICE IS STATIONARY, AND SPECIFY CENTROID OF POSITION INFORMATION INCLUDED IN T SECONDS INTERVAL OF PROBE DATA AS BEING STATIONARY POSITION OF PORTABLE DEVICE

S1003 — ACQUIRE ROAD GRADIENT AT CURRENT POSITION FROM MAP INFORMATION

S1004 — DERIVE TILT ANGLES (ANGLES OF INSTALLATION) OF PORTABLE DEVICE BY CONSIDERING THAT AVERAGES OF ACCELERATIONS FOR T SECONDS ARE GRAVITATIONAL ACCELERATION, WITH CONSIDERATION GIVEN TO ROAD GRADIENT

S1005 — STATIONARY STATE ALREADY DETECTED ?
→ NO

YES

S1007 — CALCULATE DIFFERENCES BETWEEN ALREADY CALCULATED DEVICE INSTALLATION ANGLES AND INSTALLATION ANGLES CALCULATED IN THIS CYCLE, FOR x, y, AND z AXES OF DEVICE

S1008 — ABSOLUTE VALUE OF ANY ANGULAR DIFFERENTIAL GREATER THAN FIXED VALUE B ?
NO ← → YES

S1009 — ENHANCE ACCURACY OF STATIONARY STATE

S1010 — RESET STATIONARY STATE, AND CANCEL STRAIGHT-AHEAD DRIVING DETECTION

S1006 — SET STATIONARY STATE

END

# FIG.10

VEHICLE STRAIGHT-AHEAD DRIVING DETECTION

S1100 — CALCULATE VARIANCE OF YAW ANGLE (BEARING) IN T SECONDS OF PROBE DATA

S1001 — VARIANCE OF BEARING LESS THAN FIXED VALUE C ?

YES        NO

S1102 — CALCULATE AVERAGE OF THE MOST RECENT T SECONDS OF THE THREE AXIAL DIFFERENTIAL ACCELERATIONS IN THE DEVICE-THREE-AXIS-BASED COORDINATE SYSTEM

S1103 — CALCULATE ABSOLUTE VALUE OF COMBINED VECTOR OF CALCULATED THREE AXIAL AVERAGE ACCELERATIONS

S1104 — CALCULATED ABSOLUTE VALUE GREATER THAN FIXED VALUE D ?

YES        NO

S1105 — DECIDE THAT VEHICLE IS ACCELERATING STRAIGHT AHEAD, AND CONSIDER THAT AVERAGE OF DEVICE ACCELERATION WITH GRAVITATIONAL ACCELERATION ELIMINATED IS ENTIRELY ACCELERATION IN DIRECTION OF PROGRESSION

S1106 — FROM MAP INFORMATION, ACQUIRE ROAD GRADIENT AT CENTROID OF SHIFTING HISTORY

S1107 — FROM AVERAGE ACCELERATIONS, CALCULATE YAW ROTATIONAL ANGLE FOR CONVERTING FROM DEVICE-THREE-AXIS-BASED COORDINATE SYSTEM TO VEHICLE-THREE-AXIS-BASED COORDINATE SYSTEM

STRAIGHT-AHEAD DRIVING STATE DETECTED ?        S1108

NO        YES

S1109 — SET STRAIGHT-AHEAD DRIVING STATE

ENHANCE ACCURACY OF STRAIGHT-AHEAD DRIVING STATE — S1110

END

# FIG.11

| PORTABLE DEVICE | TELEMATICS CENTER |
|---|---|
| 118 — DRIVING CHARACTERISTIC DISPLAY PROCESSING UNIT | 213 — DRIVING CHARACTERISTIC DIAGNOSIS PROCESSING UNIT |

200
100

S1200 → QUERY FOR DRIVING CHARACTERISTIC → RECEIVE QUERY S1210

EXTRACT PROBE DATA FOR SPECIFIED INTERVAL S1211

CALCULATE VARIANCE AND SKEWNESS OF ACCELERATION OF VEHICLE IN LONGITUDINAL DIRECTION IN SUBJECT PROBE DATA S1212

COMPARE WITH STATISTICAL VALUES FOR OTHER DRIVERS, AND DIAGNOSIS DRIVING CHARACTERISTIC S1213

S1201 RECEIVE RESULTS OF DIAGNOSIS ← TRANSMIT RESULTS OF DIAGNOSIS S1214

S1202 DISPLAY RESULTS OF DIAGNOSIS

END

END

# FIG.12

100

130

1300

PREVIEW SCREEN

1301

STARTING DRIVING

1302

DIAGNOSE DRIVING CHARACTERISTIC

1303

PLEASE ADJUST PORTABLE DEVICE
TO DESIRED ORIENTATION

# FIG.13

100

130

1300 — PREVIEW SCREEN

1301 — STOPPING DRIVING

1302 — DIAGNOSE DRIVING CHARACTERISTIC

1400 — STATIONARY DETECTION COMPLETED

1405 — RESET STATIONARY STATE

1401 — STRAIGHT-AHEAD DRIVING DETECTION COMPLETED

1406 — RESET STRAIGHT-AHEAD DRIVING STATE

1404

1402 — ABRUPT ACCELERATION DETECTED, SENDING VIDEO TO CENTER

1403 — TRANSMITTING PROBE DATA

# FIG.14

100

130

1500

**REPLAY VIEWING SCREEN**

1501

2012/12/23 16:40:53 ▼

1502

SKEWNESS Sk

Rank C

1503

★

Rank A

VARIANCE
σ

Rank D

Rank B

# FIG.15

1601

1602

1602

1600

100

1603

Europäisches
Patentamt

European
Patent Office

Office européen
des brevets

# EUROPEAN SEARCH REPORT

Application Number

EP 15 16 4453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHANNES PAEFGEN ET AL: "Driving behavior analysis with smartphones", PROCEEDINGS OF THE 11TH INTERNATIONAL CONFERENCE ON MOBILE AND UBIQUITOUS MULTIMEDIA, MUM '12, 1 January 2012 (2012-01-01), page 1, XP55213921, New York, New York, USA DOI: 10.1145/2406367.2406412 ISBN: 978-1-45-031815-0 * Section 3 * | 1-11 | INV.<br>G06K9/00<br>G01P21/00 |
| X | Radoslav Stoichkov: "Android Smartphone Application for Driving Style Recognition Android Smartphone Applikation für Fahrstilerkennung", , 24 September 2013 (2013-09-24), XP55213924, Retrieved from the Internet: URL:http://www.eislab.fim.uni-passau.de/files/publications/students/Stoichkov-Projektarbeit.pdf [retrieved on 2015-09-16] * Chapters 2, 4, 5 * | 1-11 | |
| X | WO 00/17607 A1 (MAGELLAN DIS INC [US]) 30 March 2000 (2000-03-30) * page 2 - page 7; figures 1-5 * | 1,2,4,5, 8,9,11 | TECHNICAL FIELDS SEARCHED (IPC)<br><br>G06K<br>G01P |
| X | US 2013/081442 A1 (BASIR OTMAN A [CA] ET AL) 4 April 2013 (2013-04-04) * abstract; figures 1,11,12 * * paragraph [0059] - paragraph [0090] * | 1-5,7-11 | |

-/--

The present search report has been drawn up for all claims

| Place of search | Date of completion of the search | Examiner |
|---|---|---|
| The Hague | 18 September 2015 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 15 16 4453 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAVI BHORASKAR ET AL: "Wolverine: Traffic and road condition estimation using smartphone sensors", COMMUNICATION SYSTEMS AND NETWORKS (COMSNETS), 2012 FOURTH INTERNATIONAL CONFERENCE ON, IEEE, 3 January 2012 (2012-01-03), pages 1-6, XP032115080, DOI: 10.1109/COMSNETS.2012.6151382 ISBN: 978-1-4673-0296-8 * Section III * | 1-5,8,9,11 | |
| A | Jussi Parviainen ET AL: "Barometer-Aided Road Grade Estimation", IAIN World Congress, 1 October 2009 (2009-10-01), XP55213935, Retrieved from the Internet: URL:http://www.tkt.cs.tut.fi/research/nappo_files/ParviainenIAIN09.pdf [retrieved on 2015-09-16] * Sections 1 and 3; figures 1,2 * | 1-11 | |

| | TECHNICAL FIELDS SEARCHED (IPC) |

The present search report has been drawn up for all claims

| Place of search | Date of completion of the search | Examiner |
|---|---|---|
| The Hague | 18 September 2015 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 4453

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2015

| Patent document cited in search report | | Publication date | Patent family member(s) | | Publication date |
|---|---|---|---|---|---|
| WO 0017607 | A1 | 30-03-2000 | AU | 6392699 A | 10-04-2000 |
| | | | US | 6532419 B1 | 11-03-2003 |
| | | | WO | 0017607 A1 | 30-03-2000 |
| US 2013081442 | A1 | 04-04-2013 | CA | 2847384 A1 | 04-04-2013 |
| | | | US | 2013081442 A1 | 04-04-2013 |
| | | | WO | 2013049819 A1 | 04-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014088009 A

- JP 4729137 B